(19) **Europäisches Patentamt / European Patent Office / Office européen des brevets**

(11) **EP 4 492 009 A1**

(12) **EUROPEAN PATENT APPLICATION**
published in accordance with Art. 153(4) EPC

(43) Date of publication:
**15.01.2025 Bulletin 2025/03**

(21) Application number: **23849060.1**

(22) Date of filing: **15.06.2023**

(51) International Patent Classification (IPC):
*G01C 21/30* (2006.01)

(52) Cooperative Patent Classification (CPC):
**G01C 21/30; G01C 21/1656**

(86) International application number:
**PCT/CN2023/100444**

(87) International publication number:
**WO 2024/027350 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022  CN 202210929163**

(71) Applicant: **Tencent Technology (Shenzhen) Company Limited**
**Shenzhen, Guangdong 518057 (CN)**

(72) Inventor: **HE, Jin**
**Shenzhen, Guangdong 518057 (CN)**

(74) Representative: **Nederlandsch Octrooibureau**
**P.O. Box 29720**
**2502 LS The Hague (NL)**

(54) **VEHICLE POSITIONING METHOD AND APPARATUS, COMPUTER DEVICE AND STORAGE MEDIUM**

(57)    A vehicle positioning method may be applied to the fields of maps, autonomous driving, and intelligent transportation. The method includes: obtaining odometer data of a vehicle during driving (step 202); predicting, based on the odometer data and a first working state of a filter at a first moment, a second working state of the filter at a second moment (step 204); predicting location information of the vehicle at the second moment based on the second working state (step 206); selecting a target road section that matches the location information from candidate road sections in an electronic map, and determining matching point information corresponding to the location information in the target road section (step 208); and correcting the location information based on the matching point information, to obtain positioning information of the vehicle at the second moment (step 210).

FIG. 2

**Description**

RELATED APPLICATION

This application claims priority to Chinese Patent Application No. 2022109291632, entitled "VEHICLE POSITIONING METHOD AND APPARATUS, COMPUTER DEVICE, AND STORAGE MEDIUM" and filed with the China National Intellectual Property Administration on August 3, 2022, which is incorporated herein by reference in its entirety.

FIELD OF THE TECHNOLOGY

This application relates to the field of computer technologies, and in particular, to a vehicle positioning method and apparatus, a computer device, a storage medium, and a computer program product.

BACKGROUND OF THE DISCLOSURE

With the development of computer technologies and Internet technologies, intelligent driving applied in different business scenarios has attracted wide attention from the public. Due to the emerging of various special road conditions, real-time positioning and navigation services need to be provided during driving of a vehicle.

However, in a current vehicle positioning manner, a plurality of filters are usually used for multi-sensor fusion positioning, and output parameters of the plurality of filters are weighted to ensure that stable positioning information can be obtained. However, in an actual scenario, since each filter requires inputs of parameters such as speed and angular speed, and needs to be independently connected to its own corresponding sensor, different errors may be easily introduced, hardware equipment of the vehicle is highly required, and a plurality of sets of navigation hardware are required in the vehicle. How to effectively improve the accuracy of vehicle positioning information while reducing costs of hardware equipment becomes an urgent problem to be resolved.

SUMMARY

According to various embodiments disclosed in this application, a vehicle positioning method and apparatus, a computer device, a computer-readable storage medium, and a computer program product are provided.

According to a first aspect, this application provides a vehicle positioning method. The method is performed by a computer device and includes: obtaining odometer data of a vehicle during driving; predicting, based on the odometer data and a first working state of a filter at a first moment, a second working state of the filter at a second moment; predicting location information of the vehicle at the second moment based on the second working state of the filter; selecting a target road section that matches the location information from candidate road sections in an electronic map, and determining matching point information corresponding to the location information in the target road section; and correcting the location information based on the matching point information, to obtain positioning information of the vehicle at the second moment.

According to a second aspect, this application further provides a vehicle positioning apparatus. The apparatus includes: an obtaining module, configured to obtain odometer data of a vehicle during driving; a prediction module, configured to predict, based on the odometer data and a first working state of a filter at a first moment, a second working state of the filter at a second moment; and predict location information of the vehicle at the second moment based on the second working state of the filter; a determining module, configured to select a target road section that matches the location information from candidate road sections in an electronic map, and determine matching point information corresponding to the location information in the target road section; and a correction module, configured to correct the location information based on the matching point information, to obtain positioning information of the vehicle at the second moment.

According to a third aspect, this application further provides a computer device. The computer device includes a memory and one or more processors, the memory having computer-readable instructions stored therein, and the processor, when executing the computer-readable instructions, implementing the following steps: obtaining odometer data of a vehicle during driving; predicting, based on the odometer data and a first working state of a filter at a first moment, a second working state of the filter at a second moment; predicting location information of the vehicle at the second moment based on the second working state of the filter; selecting a target road section that matches the location information from candidate road sections in an electronic map, and determining matching point information corresponding to the location information in the target road section; and correcting the location information based on the matching point information, to obtain positioning information of the vehicle at the second moment.

According to a fourth aspect, this application further provides a computer-readable storage medium. The computer-readable storage medium having computer-readable instructions stored therein, the computer-readable instructions, when executed by a processor, implementing the following steps: obtaining odometer data of a vehicle during driving; predicting, based on the odometer data and a first working state of a filter at a first moment, a second working state of the filter at a second moment; predicting location information of the vehicle at the second moment based on the second working state of the filter; selecting a target road section that matches the location information from candidate road sections in an electronic map, and determining matching point information corresponding to the location information in the target road section; and correcting the location information based on the matching point information, to obtain positioning information of the vehicle at the second moment.

According to a fifth aspect, this application further provides a computer program product. The computer program product includes computer-readable instructions, the computer-readable instructions, when executed by a processor, implementing the following steps: obtaining odometer data of a vehicle during driving; predicting, based on the odometer data and a first working state of a filter at a first moment, a second working state of the filter at a second moment; predicting location information of the vehicle at the second moment based on the second working state of the filter; selecting a target road section that matches the location information from candidate road sections in an electronic map, and determining matching point information corresponding to the location information in the target road section; and correcting the location information based on the matching point information, to obtain positioning information of the vehicle at the second moment.

Details of one or more embodiments of this application are provided in the accompany drawings and descriptions below. Other features and advantages of this application are illustrated in the specification, the accompanying drawings, and the claims.

BRIEF DESCRIPTION OF THE DRAWINGS

To describe the technical solutions in the embodiments of this application more clearly, the following briefly introduces the accompanying drawings required for describing the embodiments or exemplary technologies. Apparently, the accompanying drawings in the following description show merely some embodiments of this application, and a person of ordinary skill in the art may still derive other drawings from these accompanying drawings without creative efforts.

FIG. 1 is a diagram of an application environment of a vehicle positioning method according to an embodiment.

FIG. 2 is a schematic flowchart of a vehicle positioning method according to an embodiment.

FIG. 3 is a schematic diagram of correction processing on the predicted positioning information according to an embodiment.

FIG. 4 is a schematic flowchart of steps of correcting a prediction state based on a correction error to obtain a corrected prediction state according to an embodiment.

FIG. 5 is a schematic diagram of lane-level positioning and navigation according to an embodiment.

FIG. 6 is a schematic diagram of a method framework applied to road-level positioning according to an embodiment.

FIG. 7 is a schematic diagram of a method framework applied to lane-level positioning according to an embodiment.

FIG. 8 is a schematic diagram of coordinate transformation between an odometer coordinate system and an ENU coordinate system according to an embodiment.

FIG. 9 is a schematic diagram of lane-level lane change guidance according to an embodiment.

FIG. 10 is a structural block diagram of a vehicle positioning apparatus according to an embodiment.

FIG. 11 is a diagram of an internal structure of a computer device according to an embodiment.

DESCRIPTION OF EMBODIMENTS

To make the objectives, technical solutions, and advantages of this application clearer and more understandable, this application is further described in detail below with reference to accompanying drawings and embodiments. It is to be understood that the specific embodiments described herein are only used for explaining this application, and are not used for limiting this application.

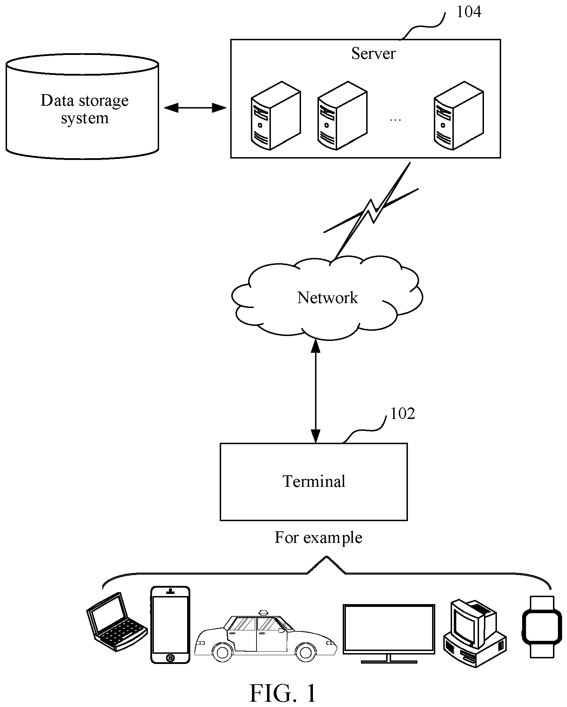

A vehicle positioning method provided in the embodiments of this application may be applied to an application environment shown in FIG. 1. A terminal 102 communicates with a server 104 through a network. A data storage system may store data that the server 104 needs to process. The data storage system may be integrated on the server 104, or placed on a cloud or another server. The terminal 102 may obtain odometer data of a vehicle during driving from a local database, or the terminal 102 may obtain the odometer data of the vehicle during driving from the server 104. The terminal 102 predicts, based on the odometer data and a first working state of a filter at a first moment, a second working state of the filter at a second moment. The terminal 102 predicts location information of the vehicle at the second moment based on the second working state of the filter. The terminal 102 selects a target road section that matches the location information from candidate road sections in an electronic map, and determines matching point information corresponding to the location information in the target road section. The terminal 102 corrects the location information based on the matching point information, to obtain positioning information of the vehicle at the second moment, the positioning information and working states of the filter being defined in the same coordinate system.

The terminal 102 may be, but not limited to, a desktop computer, a notebook computer, a smartphone, a tablet computer, an Internet of Things device, and a portable wearable device. The Internet of Things device may be a smart speaker, a smart television, a smart air conditioner, a smart in-vehicle device, or the like. The portable wearable device may be a smart watch, a smart band, a head-mounted device, or the like. The server 104 may be implemented by using an independent server or a server cluster that includes a plurality of servers.

It may be understood that, the server 104 provided in the embodiments of this application may also be a service node in a blockchain system. Service nodes in the blockchain system form a peer-to-peer (P2P) network. The P2P protocol is an application-layer protocol running over the Transmission Control Protocol (TCP).

An intelligent traffic system (ITS) is also referred to as an intelligent transportation system and applies advanced science and technologies (an information technology, a computer technology, a data communication technology, a sensor technology, an electronic control technology, an automatic control technology, operational research, an artificial intelligence technology, and the like) to transportation, service control, and vehicle manufacturing comprehensively and effectively, so as to strengthen a connection between a vehicle, a road, and a user, thereby forming an integrated transportation system for safety assurance, efficiency improvement, environmental enhancement, and energy saving.

Alternatively, an intelligent vehicle infrastructure cooperative system (IVICS), vehicle infrastructure cooperative system for short, is a development direction of the intelligent transportation system (ITS). The vehicle infrastructure cooperative system adopts advanced wireless communication and new-generation Internet technologies to comprehensively implement dynamic real-time information interaction of vehicle-to-vehicle, and vehicle-to-road, and perform active vehicle safety control and road collaboration management based on acquisition and integration of full-time dynamic traffic information, thus fully implementing effective collaboration of people, vehicles and roads, ensuring traffic safety and improving traffic efficiency, thereby forming a safe, efficient, and environmentally friendly road traffic system.

Computer vision (CV) is a science that studies how to use a machine to "see", and furthermore, is machine vision that a camera and a computer are configured to replace human eyes to perform recognition, recording, measurement, and the like on a target, and further perform graphic processing, so that the computer processes the target into an image more suitable for human eyes to observe, or an image transmitted to an instrument for detection. As a scientific discipline, the CV studies related theories and technologies in an attempt to establish an AI system that can obtain information from images or multidimensional data. The CV technologies generally include technologies such as image processing, image recognition, image semantic understanding, image retrieval, optical character recognition (OCR), video processing, video semantic understanding, video content/behavior recognition, 3D object reconstruction, a 3D technology, virtual reality, augmented reality, synchronous positioning, map construction, automatic driving, and intelligent transportation, and further include biometric feature recognition technologies such as common face recognition and fingerprint recognition.

With the research and progress of the AI technology, the AI technology is studied and applied in a plurality of fields such as a common smart home, a smart wearable device, a virtual assistant, a smart speaker, smart marketing, unmanned driving, unmanned driving, an unmanned aerial vehicle, a robot, smart medical care, smart customer service, vehicle to everything, autonomous driving, and smart transportation. It is believed that with the development of technologies, the AI technology will be applied to more fields, and play an increasingly important role.

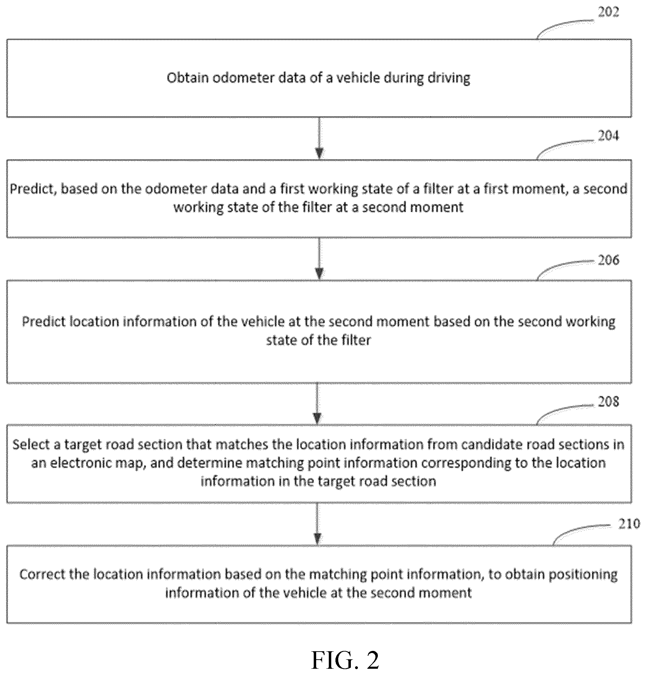

In all embodiments, as shown in FIG. 2, a vehicle positioning method is provided. An example in which the method is applied to the terminal shown in FIG. 1 is used for description. The method includes the following steps:

Step 202: Obtain odometer data of a vehicle during driving.

The vehicle refers to a vehicle traveling on a road. For example, a vehicle 1, a vehicle 2, and a vehicle 3 traveling on a road A can all be used as target vehicles. The vehicle is installed with an in-vehicle terminal, a camera, and a sensor. The in-vehicle terminal installed in the vehicle may obtain corresponding odometer data in real time when the vehicle is traveling on the road A.

An odometer refers to an apparatus for measuring distance of travel, for example, various types of sensors installed on the vehicle for measuring distance of travel. Odometer data refers to data obtained from an apparatus for measuring distance of travel. For example, the odometer data of a current vehicle during driving is obtained from an inertial measurement unit (IMU for short). The inertial measurement unit is an apparatus for measuring a three-axis posture angle and an acceleration of an object. The odometer data in this application may include location data, course data, and timestamp information. For example, odometer data of a target vehicle at a moment may be denoted as O1=(x,y,yaw), where x represents a coordinate value of an X-axis of the target vehicle in an odometer coordinate system, y represents a coordinate value of a Y-axis of the target vehicle in the odometer coordinate system, and yaw represents a course angle of the target vehicle in the odometer coordinate system.

Specifically, if a terminal device is installed in the target vehicle, or the target vehicle has association with a terminal device, the terminal may obtain odometer data of the target vehicle during driving, and use the obtained odometer data as an input parameter of a filter, so that the filter performs recursion based on the inputted odometer data and an initial working state to predict a working state at a next moment. The odometer data includes corresponding location data and course data of the target vehicle at different moments. The terminal device installed in the target vehicle includes, but not limited to, an in-vehicle terminal device, a mobile terminal device, a portable terminal device, and the like.

For example, if a target vehicle A has an association with a terminal A, the terminal A may obtain odometer data A of the target vehicle A when traveling on a driving road A at a current moment, which is denoted as OA=(x, y, yaw), where x represents a coordinate value of an X-axis of the target vehicle in the odometer coordinate system, y represents a coordinate value of a Y-axis of the target vehicle in the odometer coordinate system, and yaw represents a course angle of the target vehicle in the odometer coordinate system.

Step 204: Predict, based on the odometer data and a first working state of a filter at a first moment, a second working state of the filter at a second moment.

The filter refers to a filter selected from different types of candidate filters. For example, the filter in this application includes, but not limited to, a Kalman filter. It may be understood that the filter used in this application is a Kalman filter, and a mode of the Kalman filter is state estimation plus state correction. State estimation is to perform state estimation according to a dynamic formula by using inputted sensor information. State correction requires the participation of independent observation information, for example, an independent GPS receiver, provided SD map matching, and visual information, which may all be used as independent observation information after processed, to correct the state of the Kalman filter. Since GPS data acquisition, SD map matching, and visual information acquisition are independent of each other, corresponding correction may be independent.

The first moment and the second moment are used to distinguish different moments. For example, the first moment is a previous moment, and the second moment is a later moment. In another example, the first moment is a current moment, and the second moment is a next moment (that is, a future moment). That is, the second moment in this application is later than the first moment.

A working state of the filter refers to a state of the filter at a moment. The working state of the filter includes a course angle, longitude, and latitude of the target vehicle, and a transformation relationship between an odometer coordinate system and a local Cartesian coordinates coordinate system or equivalent data. Both the odometer coordinate system and the local Cartesian coordinates coordinate system are Cartesian coordinate systems. The local Cartesian coordinates coordinate system (ENU) may also be referred to as a topocentric coordinate system and a station coordinate system, which are mainly for understanding law of movement of other objects centered on an observer. For example, the local Cartesian coordinates coordinate system is required for an angle of view, azimuth, and distance of a receiver-visible GPS satellite. The local Cartesian coordinates coordinate system is a coordinate system with an observation station as an origin, that is, a prepared base is used to set points for observation and measurement. For example, working states of the filter in this application may include the first working state and the second working state. The first working state refers to a working state of the filter at the first moment, for example, the first working state may be an initial working state of the filter for initialization, which is represented as X0=(C0, lon0, lat0,T). The second working state refers to a working state of the filter at the second moment estimated through prediction, for example, the second working state may be a working state predicted by the filter at a next moment, that is, the predicted working state of the filter at the next moment may be represented as X0+1|0=(C1, lon1, lat1,T). It may be understood that, the first working state and the second working state in this application are only used to distinguish the working states of the filter at different moments. The predicted second working state of the filter at the second moment refers to the working state at the next moment estimated by the filter performing state recursion on the working state at the next moment based on the working state at the first moment, that is, the predicted second working state. For example, based on a working state Xk at the first moment, the filter performs state recursion on the working state at the second moment, and the estimated working state at the second moment is Xk+1|k. The working state Xk+1|k is the predicted second working state of the filter at the second moment.

Specifically, after the terminal obtains the odometer data of the vehicle during driving, the terminal may predict the second working state of the filter at the second moment based on the odometer data and the first working state of the filter at the first moment. The first moment may be an initial moment, that is, when a navigation system of the terminal performs vehicle positioning for the first time, if the navigation system is not initialized, the terminal needs to initialize the filter. For example, an initialization process includes: determining a transformation relationship T between the odometer coordinate system and the ENU coordinate system, determining an error value of the odometer data, and determining an initial value and an initial covariance matrix of a filter state.

For example, an example in which the filter is a Kalman filter is used for description. Assuming that when the terminal A performs vehicle positioning for the first time, if the navigation system is not initialized, the terminal first initializes the Kalman filter to determine an initial working state of the filter X0=(C0, lon0, lat0, T), that is, including a course angle, longitude, and latitude of the vehicle, and the transformation relationship T between the odometer coordinate system and the ENU coordinate system. Further, after the terminal obtains the odometer data of the target vehicle A during driving, the terminal may predict that the second working state of the Kalman filter at the next moment is X0+1|0=(C1, lon1, lat1, T) based on the odometer data and the first working state of the Kalman filter at the first moment being X0=(C0, lon0, lat0, T).

Step 206: Predict location information of the vehicle at the second moment based on the second working state of the filter.

The location information at the second moment obtained through prediction in this application may also be referred to as predicted location information.

Specifically, after the terminal predicts the second state of the filter at the second moment based on the odometer data and the first working state of the filter at the first moment, the terminal may predict location information of the vehicle at the second moment based on the second working state of the filter. Since the second working state outputted by the filter includes the course angle, longitude, and latitude of the vehicle, and the transformation relationship between the odometer coordinate system and the ENU coordinate system, the terminal may use the course angle, longitude, and latitude in the second working state as the location information of the vehicle at the second moment.

For example, assuming that the terminal determines, based on the odometer data of the target vehicle A during driving and an initial working state of a target filter, a second working state of the target filter at the next moment as X0+1|0=(C1,lon1,lat1,T), the terminal may use a course angle C1, a longitude value lon1, and a latitude value lat1 in the predicted second working state X0+1|0=(C1,lon1,lat1,T) as location information of the target vehicle A at the next moment.

Step 208: Select a target road section that matches the location information from candidate road sections in an electronic map, and determine matching point information corresponding to the location information in the target road section.

Electronic maps, also known as digital maps, are maps that are stored and consulted in a digital form by using computer technologies. Electronic maps may include electronic maps with different precisions. For example, the electronic map in this application include, but not limited to, a HD map and an SD map.

HD (High Definition) map refers to a type of map data that can provide lane-level information, mainly for autonomous driving and assistant driving, with the precision of up to centimeter level. HD map data can provide information such as road shapes, locations of road markers, directions and locations of lane lines, and locations of traffic lights.

SD map (Street Directory Map) is a road-level navigation map, mainly applied to scenarios such as navigation and path planning, and mainly providing information including road shapes, lengths, and slopes.

Candidate road sections refer to a plurality of road sections in the electronic map. For example, two adjacent road sections L12 and L23 in the SD map are used as candidate road sections.

Target road section refers to a road section selected from the candidate road sections. For example, the road section L12 is selected from the candidate road sections L12 and L23 in the SD map as the target road section.

Matching point information refers to positioning point information obtained by matching the predicted positioning information with information in the electronic map. For example, the matching point information in this application may be positioning point information in the SD map obtained by matching the predicted positioning information with information in the SD map; or the matching point information in this application may be positioning point information in the HD map obtained by matching the predicted positioning information with information in the HD map. That is, the matching point information in this application is determined based on the provided electronic map. The electronic map may include SD map matching or HD map matching. Using the SD map matching as an example for description, the filter outputs positioning information (second working state) at the second moment. For example, the positioning information at the second moment is P, including longitude and latitude, and course. If an SD map matching module selects a link in the SD map for matching by using the positioning information P, which is equivalent to binding the positioning information P to an available road and returning a matching positioning point P1 (including longitude and latitude, course, and the like), the terminal may perform feedback correction on the filter state by using the fed back positioning point information P1. A specific estimation formula for feedback correction is not specifically limited herein.

Specifically, after the terminal determines the location information of the vehicle at the second moment based on the predicted second working state, the terminal may select the target road section that matches the location information from candidate road sections in the electronic map, and determine matching point information corresponding to the location information in the target road section. The filter outputs the predicted location information at the next moment. For example, the outputted predicted location information is P, and P includes longitude and latitude information and course information. The terminal selects a link in the SD map for matching by using the predicted location information P. That is, the terminal binds the predicted location information P to an available road based on a preset matching algorithm, and returns a matching positioning point PL, where the matching positioning point PL includes longitude and latitude information and course information. A link in the SD map generally refers to a one-way road, which is displayed as a line segment on the SD map. Any point on the link corresponds to one longitude and latitude, representing its positioning information. The link also carries other attached information, for example, a road type, a road width, and course information.

For example, after the terminal determines that the location information of the target vehicle A at the second moment is P based on the predicted second working state, the terminal may select a target link that matches the location information P from a plurality of links in the SD map based on the preset matching algorithm, and determine matching point information PL corresponding to the location information P in the target link. That is, when the terminal matches the location information P with the SD map, the terminal may project a positioning point P onto the target link, and the obtained projection point is the matching point PL. It may be understood that which link the terminal selects to project is based on an algorithm set by the SD map matching module to select the target link.

Step 210: Correct the location information based on the matching point information, to obtain positioning information of the vehicle at the second moment.

The positioning information refers to positioning information corresponding to the vehicle at the second moment after correction. For example, the predicted location information of the vehicle A at the second moment is $Xk+1 |k=(C, lon, lat)$, and the positioning information corresponding to the vehicle A at the second moment after correction is $Xk+1=(C, lon1, lat)$, where C represents a course angle of the vehicle A, lon represents longitude information of the vehicle A, and lat represents latitude information of the vehicle A.

The positioning information and working states of the filter being defined in the same coordinate system means that a coordinate system defined by the positioning information and a coordinate system defined by each working state of the filter are the same coordinate system. For example, if the positioning information is defined in a WGS84 coordinate system, working states of the filter are also defined in the WGS84 coordinate system. That is, both a recursion process and a correction process of the filter are performed in the WGS84 coordinate system, thereby effectively avoiding errors introduced during coordinate transformation. Working states of the filter refer to each working state of the filter (the first working state and the second working state are in the same coordinate system). Each working state of the filter is in the same coordinate system as the corrected positioning information. For example, working states of the filter in this application include the first working state and the second working state. The working state of the filter in this application refers to a state parameter value (a parameter related to location). For example, the working state may be represented as: $X0=(C0, lon0, lat0, T)$, that is, including a course angle C0, longitude lon0, and latitude lat0 of the vehicle, and the transformation relationship T between the odometer coordinate system and the ENU coordinate system. The positioning information and the filter state being defined in the same coordinate system means that both the corrected positioning information and the state outputted by the filter (a positioning state parameter value) are defined in the WGS84 coordinate system. Since in a conventional manner, during GPS-IMU inertial navigation fusion, the selected coordinate system is the ENU coordinate system, the filter state is defined in the ENU coordinate system, and longitude and latitude information obtained by a GPS device is generally defined in the WGS84 coordinate system. Transformation from the WGS84 coordinate system to the ENU coordinate system or in an opposite direction requires the participation of estimated positioning information, which may cause errors. However, in the present invention, a positioning state outputted by the filter is directly defined in the WGS84 coordinate system, and both the recursion process and the correction process of the Kalman filter are performed in the coordinate system, thereby avoiding errors during coordinate transformation.

Specifically, after the terminal selects the target road section that matches the location information from candidate road sections in the electronic map, and determines matching point information corresponding to the location information in the target road section, the terminal may correct the location information based on the matching point information to obtain the corrected positioning information of the vehicle at the second moment. That is, after the terminal obtains the fed back matching point information, the terminal may correct the second working state outputted by the filter by using the matching point information, so that the filter outputs more accurate positioning information at the second moment. In this application, the positioning information and working states of the filter are defined in the same coordinate system, thereby effectively avoiding errors during coordinate transformation.

For example, an example in which the filter is a Kalman filter is used for description. After the terminal selects a target road section that matches the predicted location information from candidate road sections in the electronic map, and determines matching point information corresponding to the predicted location information in the target road section, the terminal may use the matching point information as observation information to correct the predicted second working state of the filter at the second moment to obtain the corrected positioning information of the vehicle at the second moment.

In addition, in addition to using the matching point information as observation information to correct the predicted second working state of the filter at the second moment, the terminal may further use other information independently as observation information to correct the predicted second working state of the filter at the second moment. For example, the terminal may obtain navigation positioning data, that is, GNSS data, and use the GNSS data as observation information to correct the predicted second working state of the filter at the second moment. In another example, if it is determined that the currently fed back matching point information is credible, the terminal may directly use the matching point information as observation information to perform Kalman correction on the predicted second working state of the filter at the second moment. If it is determined that the currently fed back matching point information is not credible, but distances between the target vehicle and left and right lane lines are credible, the terminal may calculate new observation information by using the distances between the target vehicle and the left and right lane lines and a lane width corresponding to the left and right lane lines, and then the terminal performs Kalman correction on the predicted second working state of the filter at the second moment based on the new observation information.

In this embodiment, odometer data of a vehicle during driving is obtained; based on the odometer data and a first working state of a filter at a first moment, a second working state of the filter at a second moment is predicted; location information of the vehicle at the second moment is predicted based on the second working state of the filter; a target road section that matches the location information is selected from candidate road sections in an electronic map, and matching point information corresponding to the location information is determined in the target road section; and the location information is corrected based on the matching point information, to obtain positioning information of the vehicle at the second moment, the positioning information and working states of the filter being defined in the same coordinate system. Since the predicted location information may be matched with different electronic maps to obtain different matching point information, there is no need to additionally add hardware equipment of the vehicle, so that the matching point information may be flexibly configured to implement vehicle positioning solutions adapting to different occasions and with different precisions. In addition, defining the positioning information and working states of the filter in the same coordinate system can effectively avoid errors caused by coordinate transformation in the conventional manner, thereby effectively improving the accuracy of vehicle positioning information and effectively improving the accuracy of vehicle positioning information while reducing costs of hardware equipment.

In all embodiments, before the obtaining odometer data of a vehicle during driving, the method further includes:

obtaining historical odometer data and navigation positioning data of the vehicle during driving;

initializing the filter based on the historical odometer data and the navigation positioning data;

selecting a target location from the navigation positioning data as a starting positioning point during the initialization; and

determining an initial working state of the filter based on course information and location information of the starting positioning point.

Historical odometer data refers to historical data obtained from an apparatus for measuring distance of travel. For example, if a current moment is 9:00, the terminal may obtain historical odometer data corresponding to the moment of 8:55. The historical odometer data includes location data, course data, and timestamp.

Navigation positioning data refers to global navigation positioning data. The global navigation satellite system (GNSS), also referred to as the global navigation satellite system, is a space-based radio navigation and positioning system that can provide a user with round-the-clock information such as 3D coordinates, speed, and time at any location on a surface of the Earth or near-Earth space. For example, navigation positioning data may be obtained from a GPS device. The navigation positioning data include timestamp, valid longitude information, latitude information, and course angle information. It may be understood that, in this application, the navigation positioning data and the odometer data do not need to be at the same frequency. For example, the odometer data is 10 Hz, and the navigation positioning data is 1 Hz, that is, specific frequencies of the obtained odometer data and navigation positioning data are not specifically limited in this application.

The initial working state of the filter refers to an initialized working state of the filter.

In all embodiments, a method for initializing a filter involves an integrated consideration of historical odometry data and navigation positioning data to establish the filter's starting point. This process encompasses the precise selection of high-quality GNSS data points as references to ascertain the vehicle's initial position and heading; computation of the transformation relationship between the odometric coordinate system and the global or local coordinate system to ensure consistency in coordinates; and the establishment of an initial covariance matrix based on sensor errors and environmental factors, which articulates the confidence level in the initial state estimation. Further, an error model applicable to the processed data is defined, encompassing process noise and observation noise, thereby configuring the filter's state transition and observation matrices. After these settings are completed, the filter is initialized and subjected to validation and adjustment to ensure its performance meets expectations. Ultimately, the filter is ready to receive and process data in real-time during the vehicle's travel, commencing its tasks of prediction and correction, thereby providing the vehicle with continuous and precise positioning information.

Specifically, before the terminal obtains the odometer data of the vehicle during driving, the terminal may obtain historical odometer data and navigation positioning data of the vehicle during driving, and initialize the filter based on the historical odometer data and the navigation positioning data. That is, when performing vehicle positioning for the first time, the terminal first needs to initialize a navigation system. During the initialization of the navigation system, the terminal also initializes the filter. That is, during the initialization, the terminal may select a target location from the navigation positioning data as a starting positioning point, and determine the initial working state of the filter based on course information and longitude and latitude information of the starting positioning point.

For example, an example in which the filter is a Kalman filter is used for description. Before the terminal obtains the odometer data of the target vehicle A during driving, the terminal may obtain historical odometer data and GNSS data of the target vehicle A during driving. For ease of description, the terminal may denote the odometer data as O=(x,y,yaw), where x represents a coordinate value of an X-axis of the target vehicle in an odometer coordinate system, y represents a coordinate value of a Y-axis of the target vehicle in the odometer coordinate system, and yaw represents a course angle of the target vehicle in the odometer coordinate system. In addition, the terminal may denote the GNSS data as G=(lonG, latG, CG), where lonG represents a longitude value of GNSS, latG represents a latitude value of GNSS, and CG represents a course value of GNSS.

Further, the terminal may initialize the Kalman filter based on the historical odometer data and the GNSS data. During the initialization, the terminal may determine a GNSS point with good quality from the GNSS data as a starting point S, and use course information and location information of the starting point S as an initial value in an initial working state X1 of the Kalman filter. In addition, the terminal may select a reference odometer point Or=(xr, yr, yawr) from the historical odometer data, and determine the transformation relationship T between the odometer coordinate system and the ENU coordinate system based on the reference odometer point Or=(xr, yr, yawr) and the starting point S, to obtain the initial working state X1=X1=(C, lon, lat, T) of the filter. That is, the initial state includes the course angle, the longitude value, and the latitude value of the target vehicle A, and the transformation relationship T between the odometer coordinate system and the ENU coordinate system. In addition, the initialization process further includes steps of the terminal determining an error value of the odometer data and determining the initial covariance matrix of the state of the Kalman filter.

It may be understood that a specific initialization method is not limited in the embodiments of this application. In addition, in the embodiments of this application, a method for determining quality of GNSS includes, but not limited to, checking whether the shapes of two trajectories match by using the smoothness of a GPS trajectory and signal-to-noise ratio information in a GSV, or by using other independent information, for example, odometer data, to determine a GNSS point with good quality.

In this embodiment, the GNSS point with good quality is determined from the GNSS data as the starting point, and the course information and the location information of the starting point are used as the initial value in the initial working state of the filter. In addition, the transformation relationship T between the odometer coordinate system and the ENU coordinate system is also used as an initial value in the initial working state of the filter, to provide more accurate initial data for subsequent state recursion and correction, so that the filter outputs more accurate positioning information.

In all embodiments, the odometer data includes odometer data at different moments; and the step of predicting, based on the odometer data and a first working state of a filter at a first moment, a second working state of the filter at a second moment includes:

determining an odometer increment based on the odometer data at different moments; and

predicting the second working state of the filter at the second moment based on the odometer increment and the first working state of the filter at the first moment.

The odometer increment refers to a variation of the odometer, which refers to a difference between odometer values at different moments. For example, the terminal may perform difference calculation on odometer data corresponding to the moment of 9:00 and odometer data corresponding to the moment of 8:55. The obtained difference is an odometer increment within the period of time from 8:55 to 9:00.

Specifically, after the terminal obtains the odometer data of the vehicle during driving, the terminal may determine the odometer increment based on odometer data at different moments, and predict the second working state of the filter at the second moment based on the odometer increment and the first working state of the filter at the first moment. That is, the terminal may perform state estimation based on sensor information and a dynamic formula inputted at a previous moment, to estimate the working state of the filter at the next moment.

For example, an example in which the filter is a Kalman filter is used for description. When the terminal performs vehicle positioning for the first time, the terminal needs to initialize the Kalman filter. After the initialization is completed and the terminal obtains new odometer data acquired by a sensor, the terminal may perform Kalman filter recursion based on the new odometer data.

In all embodiments, the Kalman state recursion may be performed by using the function shown in the following formula (1):

$$\begin{cases} X_{k+1|k} = f(X_k, \Delta O) \\ P_{k+1|k} = \Phi_k \cdot P_k \cdot \Phi_k^T + Q_k \cdot R \cdot Q_k^T \end{cases} \quad (1)$$

$X_k$ and $X_{k+1|k}$ respectively represent a positioning state at moment k (the first working state) and a predicted state at moment k+1 (the second working state), and $f(X_k, \Delta O)$ represent state transformation from moment k to moment k+1. $P_k$ represents a covariance matrix at moment k, $P_{k+1|k}$ represents a prediction covariance matrix, $\Phi_k$ represents a state transition matrix at moment k, $Q_k$ represents a linear quantity related to an odometer, R represents measurement noise of the odometer, and $\Delta O$ represents an odometer increment. The function f represents a function that transforms odometer data into positioning data. It may be understood that, a specific implementation of the function f is not limited in the embodiments of this application.

In this embodiment, the fusion of a plurality of signals and data is implemented by using a Kalman filtering method as a positioning framework, and advantages of the plurality of signals are combined to avoid a loss of a single signal. In a method framework provided in this application, an observation signal may be flexibly configured to implement positioning solutions adaptive to different occasions and with different precisions.

In all embodiments, the step of predicting the second working state of the filter at the second moment based on the odometer increment and the first working state of the filter at the first moment includes:

performing coordinate transformation on the odometer increment based on a coordinate transformation relationship, to obtain the odometer increment in a target coordinate system, the coordinate transformation relationship being a transformation relationship between an odometer coordinate system and the target coordinate system; and

predicting the second working state of the filter at the second moment based on the odometer increment in the target coordinate system and the first working state of the filter at the first moment.

The target coordinate system refers to a coordinate system selected from a plurality of coordinate systems. For example, the target coordinate system is the ENU coordinate system.

Specifically, after the terminal determines the odometer increment, the terminal may perform coordinate transformation on the odometer increment based on the coordinate transformation relationship to obtain odometer increment in the target coordinate system, and predict the second working state of the filter at the second moment based on the odometer increment in the target coordinate system and the first working state of the filter at the first moment. The coordinate transformation relationship is a transformation relationship between the odometer coordinate system and the target coordinate system. For example, when the target coordinate system is the ENU coordinate system, the coordinate transformation relationship is the transformation relationship T between the odometer coordinate system and the ENU coordinate system.

For example, an example in which the filter is a Kalman filter and the target coordinate system is the ENU coordinate system is used for description. After the terminal determines the odometer increment $(\Delta x, \Delta y)$, the terminal may perform coordinate transformation on the odometer increment $(\Delta x, \Delta y)$ based on the coordinate transformation relationship T to obtain odometer increment $(\Delta x', \Delta y')$ in the ENU coordinate system, and predict the second working state $X_{k+1|k}$ of the filter at the second moment based on the odometer increment $(\Delta x', \Delta y')$ in the ENU coordinate system and the first working state $Xk_k$ of the Kalman filter at the first moment.

A manner of transforming the odometer increment from the odometer coordinate system to the ENU coordinate system is as shown in the following formula (2):

$$\left(\Delta x', \Delta y'\right)^T = T \cdot (\Delta x, \Delta y)^T \qquad (2)$$

$(\Delta x, \Delta y)$ represents an odometer increment in the odometer coordinate system, $(\Delta x', \Delta y')$ represents an odometer increment in the ENU coordinate system, and T represents a transformation relationship between the odometer coordinate system and the ENU coordinate system.

Since longitude and latitude information obtained by the terminal from the GPS device is defined in a geodetic coordinate system, the most commonly used geodetic coordinate system is a WGS coordinate system. The WGS coordinate system is not a Cartesian coordinate system. When performing GPS-IMU inertial navigation fusion in a conventional manner, the selected coordinate system is the ENU coordinate system. Working states of the filter are defined in the ENU coordinate system, and the transformation of the obtained positioning information from the WGS coordinate system to the ENU coordinate system is non-linear transformation, which is essentially selecting a point on a sphere and performing tangent plane expansion.

For example, a general form of transformation between the WGS coordinate system and the ENU coordinate system is as follows:

Starting from an origin, longitude and latitude of the origin is S1, and after 2 seconds, a point A is reached. After integrating from the IMU, it is obtained that the vehicle coordinate change is $\Delta X$ in the ENU coordinate system. This is an original estimate and may have an error, and $\Delta X$ needs to be corrected. In this period, a change in longitude and latitude is ΔS. ΔS is transformed from the WGS coordinate system to the ENU coordinate system in a form of ΔX'=f(S1, ΔS). It may be seen that ΔX'=f(S1, ΔS) needs the participation of the state S1 at a previous moment. Since S 1 is not a state quantity of the filter, and is not in the ENU coordinate system, generally S1 has an error, which results in errors between the calculated ΔX' and an actual ideal value. ΔX' is the change in the WGS coordinate system after fusion correction is performed on ΔX, and then reverse calculation is performed through f. In this way, the reverse calculation on the transformed coordinates may also introduce errors.

In this embodiment, compared with a conventional manner of defining working states of the filter in the ENU coordinate system, since the transformation of the longitude and latitude information obtained from the GPS device from the WGS coordinate system to the ENU coordinate system is non-linear transformation, the coordinate transformation in the conventional manner generates errors. However, in the embodiments of this application, working states of the filter are directly defined in the geodetic (WGS) coordinate system, and the acquired positioning information is also defined in the geodetic (WGS) coordinate system. Therefore, the state may be directly introduced to participate in the calculation, that is, all those involved in the calculation are part of the state estimation. During transformation, no non-state quantity is not involved. Therefore, errors caused by the participation of non-state quantity are effectively avoided, making the positioning information finally outputted by the filter more accurate.

In all embodiments, assuming that the Z-axis of the odometer coordinate system coincides with the UP-axis of the ENU coordinate system, the transformation relationship T between the odometer coordinate system and the ENU coordinate system is a second-order rotation matrix and is related to an angle, denoted as θ, where θ represents an angle between the E-axis of the ENU coordinate system and the X-axis of the odometer coordinate system. In this case, the state of the Kalman filter is denoted as X=(C,lon,lat,θ), and satisfies the following formula (3).

$$T = \begin{bmatrix} \cos\theta & -\sin\theta \\ \sin\theta & \cos\theta \end{bmatrix} \tag{3}$$

With reference to the foregoing formula (1), $X_{k+1} = f(X_k, \Delta O)$ in the state recursion formula of Kalman filtering, a feasible implementation of the function f is as shown in the following formula (4):

$$X_{k+1} = f(X_k, \Delta O)$$

$$\Rightarrow \begin{cases} C_{k+1|k} = regulate(2\pi - (\theta_k + yaw - \pi/2)) \\ lat_{k+1|k} = lat_k + \dfrac{\Delta y'}{RE(1 - 2F + 3F(\sin(\text{lat}_k))^2) \cdot \cos(\text{lat}_k)} \cdot \dfrac{180.0}{\pi} \\ lon_{k+1|k} = lon_k + \dfrac{\Delta x'}{RE(1 + F(\sin(\text{lat}_k))^2)} \cdot \dfrac{180.0}{\pi} \\ \theta_{k+1|k} = \theta_k \end{cases} \tag{4}$$

RE and F are constants related to the Earth. The function regulate is used to output an angle based on a north zero course angle, and an output range is 0° to 360°. North zero represents a reference zero point of a course angle, with due north direction as 0° and due east direction as 90°. Similarly, east zero, with due east direction as 0°.

From the formula (4), the state transition is a non-linear relationship, and the Kalman filter is transformed into an extended Kalman filter. Corresponding state transition matrix and noise coefficient matrix are as follows:

$$\begin{cases} \Phi = \dfrac{\partial f}{\partial X} \\ Q = \dfrac{\partial f}{\partial \Delta O} \end{cases} \tag{5}$$

In all embodiments, the step of selecting a target road section that matches the location information from candidate road sections in an electronic map, and determining matching point information corresponding to the location information in the target road section includes:

selecting, in a case that the electronic map is a first precision map, a target road section that matches the location information from candidate road sections of the first precision map;

determining projection point information of the location information in the target road section; and

using the projection point information as the matching point information corresponding to the location information.

In this application, the first precision map may be an SD map.

Specifically, when the first precision map is an SD map, the terminal may select a target road section that matches the location information from candidate road sections of the first precision map through an SD map matching module, determine projection point information of the location information in the target road section, and use the projection point information as matching point information corresponding to the location information. It may be understood that, when the location information is matched with the SD map through the SD map matching module, a preset algorithm is running in the SD map matching module. For example, based on a Bayesian filtering method for matching, the SD map matching module itself also maintain some states, and also use the location information outputted by the filter as observation information, to correct the states maintained by itself by using the observation information.

For example, when the first precision map is an SD map, the terminal may select a target link that matches the predicted location information P from a plurality of candidate links in the SD map through the SD map matching module, and determine matching point information $P_L$ corresponding to the location information P in the target link. That is, the SD map matching module may project the positioning point P onto the target link, similar to projecting a point outside a straight line onto the straight line. The obtained projection point is the matching point $P_L$. It may be understood that which link the terminal selects as the target link to project is based on an algorithm set by the SD map matching module to select the target link.

In this embodiment, the fusion of a plurality of signals and data is implemented by using a Kalman filtering method as a positioning framework, and advantages of the plurality of signals are combined to avoid a loss of a single signal. An observation signal may be flexibly configured to implement positioning solutions adaptive to different occasions and with different precisions. For example, when an SD map exists, road-level positioning and navigation may be adaptively implemented.

In all embodiments, the step of selecting a target road section that matches the location information from candidate road sections in an electronic map, and determining matching point information corresponding to the location information in the target road section includes:

obtaining visual information carrying lane information in a case that the electronic map is a second precision map;

fusing the visual information and the location information to obtain fused location information;

selecting a target lane that matches the fused location information from candidate lanes of the second precision map; and

determining matching point information corresponding to the fused location information in the target lane.

In this application, the second precision map may be an HD map.

Visual information refers to image information including lane information captured by a camera. For example, if a camera is installed in a vehicle, an in-vehicle terminal in the vehicle may acquire data of the vehicle during driving by calling the camera, to obtain visual information including lane information. For example, the visual information is driving picture data, and driving video data acquired in real time. In the embodiments of this application, the visual information may include information such as a quantity of lanes, a lane width, a lane equation, and a vertical distance between a vehicle and lane lines on both sides of a lane.

Specifically, when the second precision map is an HD map, the terminal may obtain visual information carrying lane information, and fuse the visual information carrying the lane information and the predicted location information outputted by the filter by using a Bayesian filtering algorithm. After the fused location information is obtained, the terminal selects a lane in the HD map as a target lane, and matches the fused location information with the target lane to obtain a matching point. Matching point information includes longitude and latitude information and course information.

For example, a visual HD map matching module in the terminal may be configured to process lane line information sensed by a visual perception module and match the lane line information with the HD map, to obtain high-precision positioning information, and feed back the positioning information to the filter for correction processing. That is, the visual HD map matching module in the terminal may maintain a state vector by using a Bayesian framework, and the state vector stores probabilities of the vehicle being in all the lanes. During driving of the vehicle, state transition is performed on the state itself to obtain priori information of the state. The terminal may further use visual information as observation information, and perform Bayesian posterior estimation by using the observation information, to obtain high-precision positioning information after Bayesian posterior estimation. It may be understood that the foregoing is only a possible implementation in the solution of this application.

In this embodiment, the fusion of a plurality of signals and data is implemented by using a Kalman filtering method as a positioning framework, and advantages of the plurality of signals are combined to avoid a loss of a single signal. An observation signal may be flexibly configured to implement positioning solutions adaptive to different occasions and with different precisions. For example, when visual perception and an HD map exist, lane-level positioning and navigation may be adaptively implemented.

In all embodiments, after the determining matching point information corresponding to the fused location information in the target lane, the method further includes:

performing, in a case that it is determined that a credibility of the matching point information is greater than a credibility threshold, a step of correcting the fused location information based on the matching point information;

determining a first distance value between the vehicle and a first lane line, and determining a second distance value between the vehicle and a second lane line in a case that it is determined that the credibility of the matching point information is less than or equal to the credibility threshold;

determining target observation information based on the first distance value, the second distance value, and a lane width in a case that the first distance value and the second distance value satisfy a credible distance condition, the lane width being a distance between the first lane line and the second lane line; and

correcting the fused location information based on the target observation information to obtain the positioning information of the vehicle at the second moment.

In the context of vehicle positioning systems, credibility serves as a metric for quantifying the reliability and accuracy of the matching point information. It takes into account factors such as sensor errors, environmental conditions, and data consistency, and determines the suitability of data for filter state correction by comparing it with a preset credibility threshold. High credibility indicates that the data is deemed sufficiently accurate to directly influence the positioning outcome, while low credibility may trigger additional verification processes or reliance on alternative data sources. This concept is crucial for enhancing the precision and robustness of the positioning system.

The target observation information refers to one piece of information selected from a plurality of pieces of observation information as observation information. For example, in this application, the observation information may include visual information, SD map matching information, GNSS positioning information, and the like.

Specifically, after the terminal determines matching point information corresponding to the fused location information in the target lane, the terminal may determine whether a credibility of the matching point information is greater than a credibility threshold. If the credibility of the matching point information is greater than the credibility threshold, it represents that the matching point information is credible; or if the credibility of the matching point information is not greater than the credibility threshold, it represents that the matching point information is not credible. When the terminal determines that the credibility of the matching point information is greater than the credibility threshold, the terminal may directly perform the step of correcting the fused location information based on the matching point information. When the terminal determines that the credibility of the matching point information is less than or equal to the credibility threshold, the terminal may determine the first distance value between the target vehicle and the first lane line, and determine the second distance value between the target vehicle and the second lane line. Further, the terminal may determine whether the first distance value and the second distance value satisfy the credible distance condition. If the credible distance condition is satisfied, it represents that the first distance value and the second distance value are credible; or if the credible distance condition is not satisfied, it represents that the first distance value and the second distance value are not credible.

When the terminal determines that the first distance value and the second distance value satisfy the credible distance condition, the terminal may re-determine new target observation information based on the first distance value, the second distance value, and the lane width, so that the second working state of the filter may be subsequently corrected based on the new target observation information.

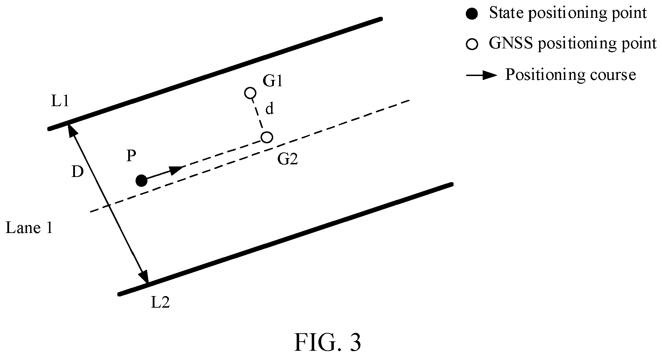

For example, FIG. 3 is a schematic diagram of correction processing on the predicted positioning information. The target lane in FIG. 3 is a lane 1, a left lane line of the lane 1 is denoted as L1, a right lane line of the lane 1 is denoted as L2, and a distance between the left lane line L1 and the right lane line L2 is D, that is, a lane width is D. After the terminal determines that a matching point corresponding to the predicted positioning information P is G1 in the target lane 1, if the terminal determines that a credibility of the matching point G1 is greater than the credibility threshold, the terminal may directly perform the step of correcting the predicted positioning information P based on the matching point G1; or if the terminal determines that the credibility of the matching point G1 is less than or equal to the credibility threshold, the terminal determines a first distance value between the target vehicle A and the first lane line, that is, the left lane line L1, as D1, and determines a second distance value between the target vehicle A and the second lane line, that is, the right lane line L2, as D2.

Further, the terminal may determine whether the first distance value D1 and the second distance value D2 satisfy the credible distance condition. When the first distance value D1 and the second distance value D2 satisfy the credible distance condition, the terminal may re-determine a target positioning point S based on the first distance value D1, the second distance value D2, and the lane width D. After the terminal determines the target positioning point S, the terminal may select the target lane 1 that matches the target positioning point S from candidate lanes in the HD map, and determine matching point information corresponding to the target positioning point S in the target lane 1 as $S_L$. The terminal may use the matching point information $S_L$ as new target observation information, and correct the predicted positioning information P based on the new target observation information, to obtain more accurate positioning information of the target vehicle at the second moment. As a result, observation information with the highest credibility may be dynamically selected as independent observation information to correct the filter state, that is, the state is corrected by using a variety of independent observation information, making the estimated state more accurate. In addition, the participation of a plurality of types of observations can make the state estimation not rely solely on an observation, and can effectively avoid the impact of misobservation on the state.

In all embodiments, the step of selecting a target road section that matches the location information from candidate road sections in an electronic map, and determining matching point information corresponding to the location information in the target road section includes:

selecting, in a case that the electronic map is a second precision map, a target lane that matches the location information from candidate lanes of a second precision map; and

determining matching point information corresponding to the location information in the target lane.

Specifically, when the second precision map is an HD map, the terminal may select a lane in the HD map as a target lane, and match the predicted location information with the target lane to obtain a matching point. Matching point information includes longitude and latitude information and course information. For example, the HD map matching module in the terminal may calculate a lane in which the target vehicle may be located based on the predicted location information outputted by the filter and the HD map, and perform posteriori estimation on the filter state to obtain more accurate positioning information of the target vehicle. It may be understood that the foregoing is only a possible implementation in the solution of this application. As a result, the fusion of a plurality of signals and data is implemented by using a Kalman filtering method as a positioning framework, and advantages of the plurality of signals are combined to avoid a loss of a single signal. An observation signal may be flexibly configured to implement positioning solutions adaptive to different occasions and with different precisions. For example, when an HD map exists, lane-level positioning and navigation may be adaptively implemented.

In all embodiments, the step of correcting the location information based on the matching point information, to obtain positioning information of the vehicle at the second moment includes:

determining an observation matrix and observation noise;

determining a correction error of the filter based on the matching point information, a prediction covariance matrix of the filter at the first moment, the observation matrix, and the observation noise;

correcting the second working state based on the correction error, to obtain a corrected second working state; and

determining the positioning information of the vehicle at the second moment based on the corrected second working state.

The specific values of the observation matrix and the observation noise may be customized. For example, when observation and correction are performed on the Kalman filter based on GNSS, the observation noise may be adjusted based on quality of GNSS, that is, low-quality GNSS corresponds to higher observation noise, and high-quality GNSS corresponds to lower observation noise.

Specifically, after the terminal selects a target road section that matches the location information from candidate road sections in the electronic map, and determines matching point information corresponding to the location information in the target road section, the terminal may determine whether the matching point information is credible. When the terminal determines that the matching point information is credible, the terminal may determine the observation matrix and the observation noise, and determine a correction error for the working state of the filter based on the matching point information, the prediction covariance matrix of the filter at the first moment, the observation matrix, and the observation noise. Further, the terminal may correct the second working state based on the correction error to obtain a corrected second working state, and determine the positioning information of the vehicle at the second moment based on the corrected second working state.

An equation of Kalman observation and correction is shown in the following formula (6):

$$Z=H^*\triangle X+w \quad (6)$$

Z is an observation of GNSS, H is an observation matrix, w is observation noise, and $\triangle X$ is a state correction error.

In this embodiment, correcting working states of the Kalman filter needs the participation of independent observation information, for example, an independent GPS receiver, provided SD map matching, and visual information. After processing, the information may be used as independent observation information to correct the working state of the filter. Since GPS data acquisition, SD map matching, and visual information acquisition are independent of each other, corresponding correction may be independent. That is, in the embodiments of this application, the state of the Kalman filter is corrected by using a variety of independent observation information, making the estimated state more accurate. Secondly, the participation of a plurality of observations can make the state estimation not rely solely on an observation, which can effectively avoid the impact of misobservation on the state, making the estimated state more accurate.

In all embodiments, during GNSS observation and correction, the terminal may calculate the state correction error $\triangle X$ according to the following formula (7), correct the working state of the filter, and correct a covariance. In addition, a rotation transformation relationship T between the odometer coordinate system and the local Cartesian coordinates coordinate system is corrected. For details, reference is made to the following formula (7):

$$\begin{cases} X_{k+1} = X_{k+1|k} + \Delta X \\ T_{k+1} = T(\Delta\theta) \cdot T_k \end{cases} \quad (7)$$

$X_{k+1|k}$ represents a prediction state at moment k+1, $X_{k+1}$ represents the corrected prediction state at moment k+1, and $\Delta X$ is a state correction error. $T_{k+1}$ represents a rotation transformation relationship between the odometer coordinate system at moment k+1 and the local Cartesian coordinates coordinate system, $T_k$ represents a rotation transformation relationship between the odometer coordinate system at moment k and the local Cartesian coordinates coordinate system, and $T(\Delta\theta)$ represents an increment of a rotation transformation relationship related to $\Delta\theta$.

Compared with a conventional manner in which only GPS is used to estimate the state, and some hidden variables are not corrected, in this application, the working state of the filter is corrected by using observation information through a similar method, including longitude and latitude, course, and some hidden variables. For example, the hidden variable is a transformation relationship between coordinate systems. The participation of a plurality of observations can make the state estimation not rely solely on an observation, which can effectively avoid the impact of misobservation on the state, making the estimated state more accurate.

In all embodiments, the method further includes:

  obtaining an initial covariance matrix and an initial state transition matrix; and
  determining the prediction covariance matrix of the filter at the first moment based on the initial covariance matrix, the initial state transition matrix, a linear quantity of the odometer, and measurement noise of the odometer.

Specifically, the terminal initializes the filter. After the initialization is completed, when the terminal obtains new odometer data, the terminal may perform Kalman filter recursion based on the working state of the filter at the initial moment to estimate the working state at the next moment. When the terminal performs Kalman filter recursion, the terminal may further obtain the initial covariance matrix and the initial state transition matrix, and determine the prediction covariance matrix of the Kalman filter at the first moment based on the initial covariance matrix, the initial state transition matrix, the linear quantity of the odometer, and the measurement noise of the odometer. The Kalman state recursion may be performed by using the function shown in the foregoing formula (1). As a result, the fusion of a plurality of signals and data is implemented by using a Kalman filtering method as a positioning framework, and advantages of the plurality of signals are combined to avoid a loss of a single signal. In a method framework provided in this application, an observation signal may be flexibly configured to implement positioning solutions adaptive to different occasions and with different precisions.

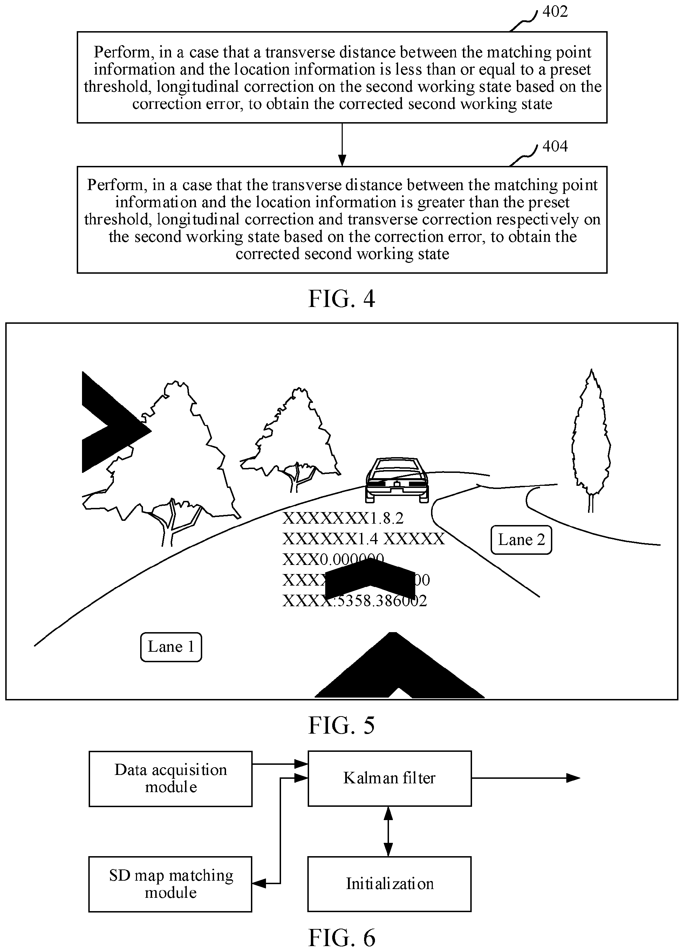

In all embodiments, as shown in FIG. 4, the step of correcting the second working state based on the correction error, to obtain a corrected second working state includes:

Step 402: Perform, in a case that a transverse distance between the matching point information and the location information is less than or equal to a preset threshold, longitudinal correction on the second working state based on the correction error, to obtain the corrected second working state.

Step 404: Perform, in a case that the transverse distance between the matching point information and the location information is greater than the preset threshold, longitudinal correction and transverse correction respectively on the second working state based on the correction error, to obtain the corrected second working state.

The longitudinal correction refers to correction at a location in a driving direction, the transverse correction refers to correction at a location in a transverse direction, the transverse direction refers to a direction perpendicular to a vehicle driving direction, and a longitudinal direction refers to a direction parallel to a driving direction.

Specifically, after the terminal selects a target road section that matches the predicted location information from candidate road sections in the electronic map, and determines matching point information corresponding to the predicted location information in the target road section, the terminal may determine whether the matching point information is credible. When the terminal determines that the matching point information is credible, the terminal may further determine whether a transverse distance between the matching point information and the predicted location information is less than a preset threshold. When the terminal determines that the transverse distance between the matching point information and the predicted location information is less than or equal to the preset threshold, the terminal may perform longitudinal correction on the second working state based on the correction error, to obtain the corrected second working state; or when the terminal determines that the transverse distance between the matching point information and the predicted location information is greater than the preset threshold, the terminal may perform longitudinal correction and transverse correction respectively on the second working state based on the correction error, to obtain the corrected second working state.

For example, FIG. 3 is a schematic diagram of correction processing on the predicted positioning information. The target lane in FIG. 3 is a lane 1, a left lane line of the lane 1 is denoted as L1, a right lane line of the lane 1 is denoted as L2, and a distance between the left lane line L1 and the right lane line L2 is D, that is, a lane width is D. When a distance between G1 and G2 is d > td, G1 is a GNSS observation point (an actual observation point). When d<=td, G2 is a GNSS observation point (a virtual GNSS observation point). A G1G2 connecting line is perpendicular to a course direction.

In this embodiment, by determining whether the transverse distance between the matching point information and the predicted location information is less than the preset threshold, different policies may be used to dynamically correct the predicted location information, making finally outputted positioning information of the vehicle more accurate.

In all embodiments, this application further provides an application scenario, and the application scenario is applied to the foregoing vehicle positioning method. Specifically, the application of the vehicle positioning method in the application scenario is as follows:

When a driver needs to position the vehicle or conduct real-time route navigation, the foregoing vehicle positioning method may be used. That is, after the driver logs in to a navigation system in the in-vehicle terminal, the in-vehicle terminal may automatically obtain odometer data and GNSS data of the target vehicle during driving, and predict the second working state of the filter at the second moment based on the obtained odometer data and the first working state of the filter at the first moment. The in-vehicle terminal may predict location information of the target vehicle at the second moment based on the second working state of the filter, select a target road section that matches the location information from candidate road sections in the electronic map, determine matching point information corresponding to the location information in the target road section, and perform feedback correction on the location information based on the matching point information, to obtain positioning information of the target vehicle at the second moment; or the in-vehicle terminal may correct the location information based on the obtained GNSS data to obtain the positioning information of the target vehicle at the second moment. The navigation system in the in-vehicle terminal may be implemented by using an independent server or a server cluster that includes a plurality of servers.

The method provided in the embodiments of this application may be applied to various positioning and navigation scenarios, or may be applied to application scenarios such as outdoor unmanned vehicle positioning and navigation, and robot positioning and navigation. The vehicle positioning method provided in the embodiments of this application is described below by using an example of an adaptive positioning and navigation scenario based on electronic map data in an AR navigation scenario.

In a conventional manner, generally, multi-sensor fusion positioning is performed by using a plurality of Kalman filters, and outputs of the plurality of Kalman filters is weighted to obtain stable positioning information, which is equivalent to multiple guarantees. However, each filter in the conventional manner requires parameter input such as speed and angular speed, and is independently connected to its own IMU. This is equivalent to requiring the vehicle to have a plurality of sets of navigation hardware, which places some requirements on hardware of the vehicle. In addition, in the conventional manner, during multi-sensor fusion positioning by using Kalman filtering, a positioning state quantity is defined in a Cartesian coordinate system similar to the local Cartesian coordinates coordinate system. Since the acquired positioning information is defined in the WGS84 coordinate system, transformation from the WGS coordinate system to the ENU coordinate system or transformation in an opposite direction requires the participation of estimated positioning information, which may cause errors.

Therefore, when vehicle positioning and navigation are performed based on the foregoing manner, it is likely to causelow accuracy of the obtained vehicle positioning information, and high hardware equipment costs are required. To resolve the foregoing problem, this application provides a positioning method based on Kalman (EKF), where the method fuses one or more of signals such as an odometer signal, a GNSS positioning signal, an SD map signal, a visual perception signal, and an HD map, and can implement road-level positioning and lane-level positioning. That is, in the solution provided in this application, visual information, SD map matching information, and GNSS positioning information are all used as observation information, to correct the filter state. These corrections are independent of each other. When there is GNSS observation, visual perception, and HD map matching observation information, the method in this application may be used to implement lane-level positioning. When there is GNSS observation or there is both GNSS observation and SD map matching observation information, the method in this application may implement road-level positioning and navigation, and may perform positioning and navigation in scenarios without GNSS signals such as a basement and a tunnel. The foregoing observations may be flexibly configured to implement different functions. In addition, the positioning state in the method provided in this application is directly defined in the WGS84 coordinate system, and both the recursion process and the correction process of the Kalman filter are performed in the WGS84 coordinate system, to avoid errors during coordinate transformation. Secondly, the positioning information obtained from the SD map or obtained by using the visual information and the HD map is also in the WGS84 coordinate system and may be directly involved in Kalman correction, thereby effectively avoiding errors during coordinate transformation and making the estimated state more accurate. That is, in this application, the state is corrected by using a variety of independent observation information, making the estimated state more accurate. Finally, the participation of a plurality of observations can make the state estimation not rely solely on an observation, which can effectively avoid the impact of misobservation on the state, and can effectively improve the accuracy of vehicle positioning information while reducing costs of hardware equipment.

On the product side, the technical solution provided in this application may be widely applied to various positioning and navigation. With reference to odometer data, GNSS data, and SD map data, the technical solution provided in this application may be applied to in-vehicle real-time positioning and navigation, and real-time positioning and navigation services may be provided in scenarios with poor GNSS quality, such as a tunnel and a basement. With reference to visual perception of lane lines and matching with the HD map, and then with reference to odometer data and GNSS data, the method provided in this application may be applied to a lane-level positioning and navigation product. FIG. 5 is a schematic diagram of lane-level positioning and navigation. In addition, the solution provided in this application is a universal positioning framework solution that may also be applied to scenarios such as outdoor unmanned vehicle positioning and navigation, and robot positioning and navigation.

On the technical side, FIG. 6 is a schematic diagram of a method framework applied to road-level positioning. A data acquisition module in FIG. 6 is configured to acquire odometer data and global navigation positioning data, that is, GNSS data. An SD map matching module is configured to match a positioning location outputted by the Kalman filter with a link of the SD map, and feed back to the filter for correction processing. A Kalman filter module is configured to implement multi-sensor fusion and positioning output. An initialization module is configured to initialize the Kalman filter.

The filter outputs location information, such as P, and P includes longitude and latitude information and course information. The SD map matching module selects a link in the SD map for matching by using the positioning information P, which is equivalent to binding the positioning information to a feasible road and returning a matching positioning point. The matching positioning point includes longitude and latitude information and course information. Subsequently, the filter may correct the filter state by using the fed back positioning point information.

It may be understood that, during SD map matching, the positioning point is projected onto a link, similar to projecting a point outside a straight line onto the straight line, and the projection point is the matching point, except that which link is selected for projection needs to be determined by the SD map matching module based on its own algorithm. When obtaining matching point data fed back by the SD map matching module, the filter performs standard EKF observation and correction.

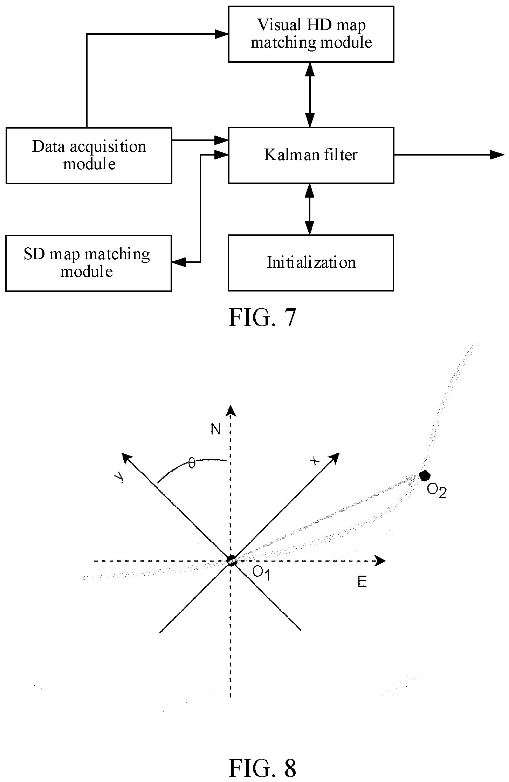

FIG. 7 is a schematic diagram of a method framework applied to lane-level positioning. A visual HD map matching module in FIG. 7 is configured to process lane line information sensed by a visual perception module and match the lane line information with the HD map, to obtain high-precision positioning information, and feed back the positioning information to the filter for correction processing.

Functions of the visual HD map matching module and the SD map matching module are similar, and a specific implementation is not limited in the present invention.

For example, during specific implementation, the visual HD map matching module may fuse the inputted visual information and the positioning information outputted by the filter by using a Bayesian filtering algorithm, and match with the HD map, that is, the visual HD map matching module selects a lane in the HD map for matching, to obtain a matching point. Matching point information includes longitude and latitude information and course information. After the visual HD map matching module obtains the matching point information, the matching point information may be fed back to the filter, so that the filter performs correction processing on the filter state by using a standard EKF correction algorithm.

The inputted visual information includes information such as a quantity of lanes, a lane width, a lane equation, and a vertical distance between a vehicle and lane lines on both sides of a lane. The visual HD map matching module maintains a state vector by using a Bayesian framework, and the state vector stores probabilities of the vehicle being in all the lanes. During driving of the vehicle, state transition is performed on the state itself to obtain priori information of the state. The module may use visual information as observation information and perform Bayesian posterior estimation by using the information. Similarly, the module may also match the positioning information outputted by the filter with the HD map, calculate a possible lane of the vehicle, and also perform posterior estimation on the state to obtain high-precision positioning information after Bayesian posterior estimation. It may be understood that the foregoing is only a possible implementation in the solution of this application.

The positioning method based on Kalman (EKF) provided in this application specifically includes the following steps:

Step 1: Acquire GNSS data and odometer data.

The odometer data includes location data, course data, and timestamp, and the GNSS data includes timestamp, valid longitude and latitude information, and course angle information. For ease of description, the terminal may denote the odometer data as O=(x,y,yaw), where x represents a coordinate value of an X-axis of the target vehicle in an odometer coordinate system, y represents a coordinate value of a Y-axis of the target vehicle in the odometer coordinate system, and yaw represents a course angle of the target vehicle in the odometer coordinate system. In addition, the terminal may denote the GNSS data as G= (lonG, latG, CG), where lonG represents a longitude value of GNSS, latG represents a latitude value of GNSS, and CG represents a course value of GNSS.

The foregoing GNSS data and odometer data do not need to be at the same frequency. For example, if the odometer data is 10 Hz, the GNSS data may be 1 Hz. It may be understood that, in most cases, frequencies of sensors are different. For example, in a VIO system, a sensor IMU configured for state propagation may reach 100 Hz, while GPS generally only has 10 Hz or lower 1 Hz. In the embodiments of this application, since a plurality of types of information may be used independently for state correction, making the estimated state in this embodiment is generally relatively accurate, there is no need to require high frequency for each observed quantity. Therefore, in the embodiments of this application, there is no requirement for a specific frequency of quantity data.

Step 2: If the system is not initialized, the terminal needs to initialize the filter.

The initialization process includes: The terminal determines a GNSS point with good quality as a starting point, and uses course information and location information of the starting point as an initial value in an initial state X of the Kalman filter; and the terminal determines a transformation relationship T between an odometer coordinate system and a local Cartesian coordinates (ENU) coordinate system, determines an error value of the odometer data, and determines an initial value and an initial covariance matrix of the state of the Kalman filter. That is, in the embodiments of this application, the state of the Kalman filter is defined as X=(C, lon, lat, T), that is, the state includes a course angle, longitude, and latitude of a vehicle, and the transformation relationship T between the odometer coordinate system and the local Cartesian coordinates (ENU) coordinate system or equivalent data. During the initialization of the filter, the terminal determines the initial value and the initial covariance matrix of the state. For example, the terminal selects a GNSS positioning point P with good quality, and uses longitude and latitude, and course of the positioning point P as the initial value of the filter state. The transformation between coordinate systems is also a part of the filter state. When determining the initial covariance matrix, the terminal selects an initial value as the initial covariance matrix based on a GNSS error.

In the embodiments of this application, a method for determining quality of GNSS includes checking whether the shapes of two trajectories match by using the smoothness of a GPS trajectory and signal-to-noise ratio information in a GSV, or by using other independent information (for example, odometer data), to determine a GNSS point with good quality. The odometer coordinate system, similar to ENU, is a Cartesian coordinate system, and the transformation between the two conforms to rigid body transformation.

For example, FIG. 8 is a schematic diagram of coordinate transformation between an odometer coordinate system and an ENU coordinate system. For example, at a point O1, the odometer coordinate system is an X-O-Y coordinate system, and the ENU coordinate system is an E-O-N coordinate system. The Z-axis of the odometer coordinate system coincides with the U-axis of the ENU coordinate system and is perpendicular to a paper surface. The odometer includes course and location information in the coordinate system, and the ENU coordinate system includes course information. The transformation relationship T between the two coordinate systems may be determined through the two values.

Step 3: After the initialization is completed, acquire new odometer data to perform Kalman filter recursion.

The Kalman state recursion may be performed in the manner shown in the foregoing formula (1). The second formula in the formula (1) is a standard Kalman covariance propagation formula, and the first formula is an overview representation. A specific form is related to a specific meaning of the odometer data and the selected transformation formula. The function f is a symbol that represents the estimated state at the next moment based on the current state and the odometer data. In the embodiments of this application, f represents a non-linear transformation process.

It may be understood that, the EKF algorithm is selected in this embodiment for positioning estimation. Similar implementations include multi-state optimization algorithms and the like, but the corresponding calculation amount is relatively large. In some cases, another algorithm may further be used for positioning estimation.

In all embodiments, a specific implementation of selecting the function f is as follows:

Assuming that the Z-axis of the odometer coordinate system coincides with the UP-axis of the ENU coordinate system, the transformation relationship T between the odometer coordinate system and the ENU coordinate system is a second-order rotation matrix and is related to an angle, denoted as θ, where θ represents an angle between the E-axis of the ENU coordinate system and the X-axis of the odometer coordinate system. In this case, the state of the Kalman filter is denoted as X=(C, lon, lat, θ), and satisfies the foregoing formula (3).

A feasible implementation of the function f is as follows:

The terminal may transform the odometer increment from the odometer coordinate system to the ENU coordinate system based on the transformation manner shown in the foregoing formula (2).

Further, the terminal may input the transformed odometer increment in the ENU coordinate system into the state recursion formula $X_{k+1} = f(X_k, \Delta O)$ of the Kalman filter in the foregoing formula (1), to obtain a feasible implementation of the function f as shown in the foregoing formula (4). From the formula (4), the state transition is a non-linear relationship, and the Kalman filter is transformed into an extended Kalman filter. The corresponding state transition matrix and noise coefficient matrix are shown in the foregoing formula (5).

Step 4: Perform Kalman observation and correction when a new GNSS observation arrives.

A Kalman observation and correction equation is shown in the foregoing formula (6). It may be understood that, each solution has its own consideration when a measurement error is specifically calculated. For example, the technical solution of this application considers inherent characteristics of GNSS when calculating the measurement error related to GNSS. When a transverse distance between a GNSS positioning point and a Kalman filter positioning point is less than a value, no transverse correction is performed, that is, no transverse information is included in Z. This is an optimization point in this application.

When the terminal performs Kalman observation and correction based on GNSS, the observation noise is adjusted based on quality of GNSS, that is, low-quality GNSS corresponds to higher observation noise, and high-quality GNSS corresponds to lower observation noise. A method for determining quality of GNSS is not specifically limited in this embodiment.

When performing GNSS observation and correction, the terminal considers a GNSS positioning error. When the terminal determines that the transverse distance between the GNSS positioning point and the Kalman filter positioning point is less than a threshold td, transverse correction is not performed for the GNSS observation, but only longitudinal correction is performed. On the contrary, both transverse correction and longitudinal correction are performed. A value of td is related to longitude of GNSS, and the value is not specifically limited in the present invention. The transverse direction refers to a direction perpendicular to a vehicle driving direction, and a longitudinal direction refers to a direction parallel to a driving direction. The transverse correction refers to correction at a location in a transverse direction, and the longitudinal correction refers to correction at a location in a driving direction.

In addition, when performing GNSS observation and correction, the terminal calculates a state correction error to correct the state, and corrects the covariance based on a standard Kalman correction form. In addition, the terminal further corrects the rotation transformation relationship T between the odometer coordinate system and the local Cartesian coordinates coordinate system. For details, reference is made to the correction manner shown in the foregoing formula (7).

Step 5: Optionally, when an SD map exists, perform SD map matching correction based on matching information of the SD map.

SD map matching refers to matching positioning information outputted by the Kalman filter with links of the SD map, selecting the most appropriate link, and calculating positioning information of a corresponding adsorption point. The positioning information of the adsorption point includes a direction of a road network, and longitude and latitude information of the adsorption point.

SD map matching correction is correcting the filter state based on longitude, latitude, and a course angle of a road link outputted by SD map matching, and according to the foregoing formula (6).

When performing SD map matching and correction, if the terminal determines that a difference between a current course angle and a course angle of the road link is greater than a selected threshold, the course angle outputted by SD map matching is considered invalid, and a corresponding course angle measurement error is 0.

Step 6: Optionally, when visual perception exists, the terminal matches the visual perception with an HD map, and uses a matching result to correct the state of the Kalman filter.

Visual perception refers to the perception of road information, including elements such as a lane line, a quantity of lanes, a current lane width, distances between a vehicle and left and right lane lines, and a current lane number. The terminal may match a visual perception result with the HD map to calculate a current location of the vehicle.

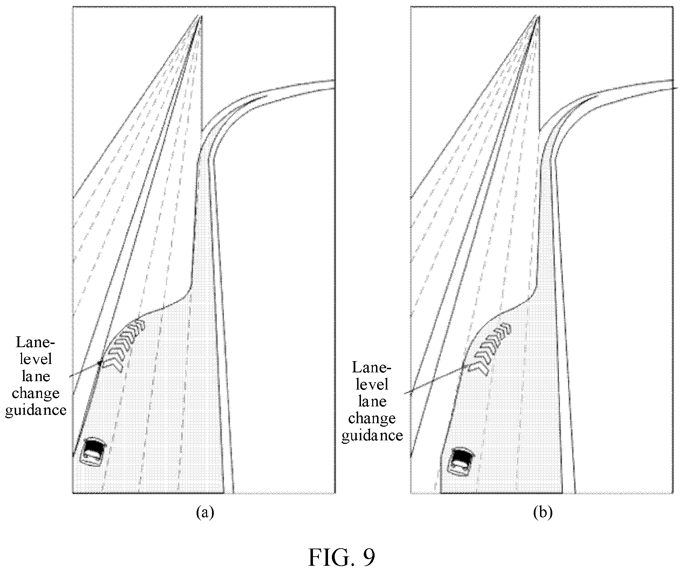

An output of the visual perception and the HD map matching module includes longitude and latitude of the positioning point, a lane width, a lane number, a distance between a vehicle and left and right lane lines, a lane course angle, and a positioning credibility probability. For example, if a currently fed back positioning point is credible, the terminal may directly perform Kalman correction by using the formula (6). If the current positioning point is not credible, but the distances between the vehicle and the left and right lanes are credible, the terminal may calculate observation information by using the left and right distances and the lane width, and then perform Kalman correction based on the observation information according to the formula (6). In addition, if a difference between a current course angle and a fed back lane course angle is greater than a value, it may be determined that the lane course angle is unreliable, and a corresponding course angle measurement error is 0. For example, when a vehicle changes lanes, the situation is the case described above. FIG. 9 is a schematic diagram of lane-level lane change guidance. For example, if there is an intersection 500 meters in front of the target vehicle, to warn a traveler to change lanes in advance, the terminal may display lane-level lane change guidance 200 meters in front of the target vehicle. Reference may be made to FIG. 9(a).

When the terminal performs visual perception observation and correction, and when the terminal calculates a measurement error matrix, adjustment may be performed based on a feedback probability. A larger probability corresponds to a smaller error, and a smaller probability corresponds to a larger error.

In this embodiment, the fusion of a plurality of signals and data is implemented by using a Kalman filtering method as a positioning framework, and advantages of the plurality of signals are combined to avoid a loss of a single signal. In a method framework provided in this application, an observation signal may be flexibly configured to implement positioning solutions adaptive to different occasions and with different precisions. For example, when visual perception and an HD map exist, this application may be applied to lane-level positioning and navigation products. In addition, the states in this application are directly defined in the WGS coordinate system, to avoid errors caused by coordinate transformation in the conventional manner. Finally, since the Kalman filtering solution used in the embodiments of this application has a small amount of states, a small dimension, and a small amount of calculation, the solution is a lightweight and widely applied positioning solution.

It is to be understood that, steps in flowcharts involved in the foregoing embodiments are displayed in sequence based on indication of arrows, but the steps are not necessarily performed in sequence based on a sequence indicated by the arrows. Unless otherwise explicitly specified in this specification, the steps are performed without any strict sequence limit, and may be performed in other sequences. In addition, at least some steps in the flowcharts involved in the foregoing embodiments may include a plurality of steps or a plurality of stages, and these steps or stages are not necessarily performed at a same moment, but may be performed at different moments. The steps or stages are not necessarily performed in sequence, but may be performed by turn or alternately with other steps or at least part of steps or stages in other steps.

Based on the same invention concept, an embodiment of this application further provides a vehicle positioning apparatus for implementing the foregoing vehicle positioning method. The implementation solution for solving the problem provided by this apparatus is similar to the implementation solution recorded in the foregoing method. Therefore, for the specific limitations in one or more embodiments of the vehicle positioning apparatus provided below, reference may be made to the foregoing limitations for the vehicle positioning method, and the description is not repeated herein again.

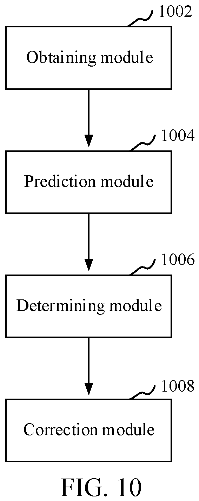

In all embodiments, as shown in FIG. 10, a vehicle positioning apparatus is provided. The apparatus includes an obtaining module 1002, a prediction module 1004, a determining module 1006, and a correction module 1008, where

the obtaining module 1002 is configured to obtain odometer data of a vehicle during driving;

the prediction module 1004 is configured to predict, based on the odometer data and a first working state of a filter at a first moment, a second working state of the filter at a second moment; and predict location information of the vehicle at the second moment based on the second working state of the filter;

the determining module 1006 is configured to select a target road section that matches the location information from candidate road sections in an electronic map, and determine matching point information corresponding to the location information in the target road section; and

the correction module 1008 is configured to correct the location information based on the matching point information, to obtain positioning information of the vehicle at the second moment, the positioning information and working states of the filter being defined in the same coordinate system.

In all embodiments, the apparatus further includes: an initialization module. The obtaining module is further configured to obtain historical odometer data and navigation positioning data of the vehicle during driving. The initialization module is configured to initialize the filter based on the historical odometer data and the navigation positioning data, select a target location from the navigation positioning data as a starting positioning point during initialization, and determine an initial working state of the filter based on course information and location information of the starting positioning point.

In all embodiments, the determining module is further configured to determine an odometer increment based on the odometer data at different moments; and predict the second working state of the filter at the second moment based on the odometer increment and the first working state of the filter at the first moment.

In all embodiments, the apparatus further includes: a coordinate transformation module, configured to perform coordinate transformation on the odometer increment based on a coordinate transformation relationship, to obtain the odometer increment in a target coordinate system, the coordinate transformation relationship being a transformation relationship between an odometer coordinate system and the target coordinate system. The determining module is further configured to predict the second working state of the filter at the second moment based on the odometer increment in the target coordinate system and the first working state of the filter at the first moment.

In all embodiments, the apparatus further includes: a selection module, configured to select, in a case that the electronic map is a first precision map, a target road section that matches location information from candidate road sections of the first precision map. The determining module is further configured to determine projection point information of the location information in the target road section; and use the projection point information as the matching point information corresponding to the location information.

In all embodiments, the first precision map includes a self-maintained state. The correction module is further configured to use the location information as observation information; and correct the self-maintained state based on the observation information to obtain the corrected self-maintained state.

In all embodiments, the apparatus further includes: a fusion module. The obtaining module is further configured to obtain visual information carrying lane information in a case that the electronic map is a second precision map. The fusion module is configured to fuse the visual information and the location information to obtain fused location information. The selection module is further configured to select a target lane that matches the fused location information from candidate lanes of the second precision map. The determining module is further configured to determine matching point information corresponding to the fused location information in the target lane.

In all embodiments, the apparatus further includes: an execution module is configured to perform, in a case that it is determined that a credibility of the matching point information is greater than a credibility threshold, a step of correcting the fused location information based on the matching point information. The determining module is further configured to determine a first distance value between the vehicle and a first lane line, and determine a second distance value between the vehicle and a second lane line in a case that it is determined that the credibility of the matching point information is less than or equal to the credibility threshold; and determine target observation information based on the first distance value, the second distance value, and a lane width in a case that the first distance value and the second distance value satisfy a credible distance condition, the lane width being a distance between the first lane line and the second lane line. The correction module is further configured to correct the fused location information based on the target observation information to obtain the positioning information of the vehicle at the second moment.

In all embodiments, the selection module is further configured to select, in a case that the electronic map is a second precision map, a target lane that matches the location information from candidate lanes of the second precision map. The determining module is further configured to determine matching point information corresponding to the location information in the target lane.

In all embodiments, the determining module is further configured to determine an observation matrix and observation noise; and determine a correction error of the filter based on the matching point information, a prediction covariance matrix of the filter at the first moment, the observation matrix, and the observation noise. The correction module is further configured to correct the second working state based on the correction error to obtain a corrected second working state. The determining module is further configured to determine the positioning information of the vehicle at the second moment based on the corrected second working state.

In all embodiments, the obtaining module is further configured to obtain an initial covariance matrix and an initial state transition matrix. The determining module is further configured to determine the prediction covariance matrix of the filter at the first moment based on the initial covariance matrix, the initial state transition matrix, a linear quantity of the odometer, and measurement noise of the odometer.

In all embodiments, the correction module is further configured to perform, in a case that a transverse distance between the matching point information and the location information is less than or equal to a preset threshold, longitudinal correction on the second working state based on the correction error, to obtain the corrected second working state; and perform, in a case that the transverse distance between the matching point information and the location information is greater than the preset threshold, longitudinal correction and transverse correction respectively on the second working state based on the correction error, to obtain the corrected second working state.

The modules in the vehicle positioning apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

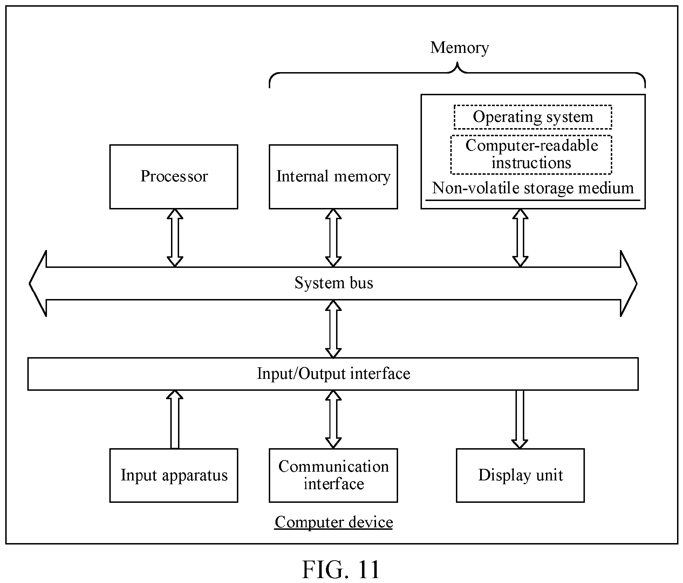

In all embodiments, a computer device is provided. The computer device may be a terminal, and an internal structure diagram thereof may be shown in FIG. 11. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and computer-readable instructions. The internal memory provides an environment for running of the operating system and the computer-readable instructions in the non-volatile storage medium. The input/output interface of the computer device is configured to exchange information between the processor and an external device. The communication interface of the computer device is configured to communicate with an external terminal in a wired or a wireless manner, and the wireless manner can be implemented by using WIFI, a mobile cellular network, an NFC (near field communication), or other technologies. The computer-readable instructions are executed by the processor to implement the vehicle positioning method. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 11 is only a block diagram of a part of a structure related to a solution of this application and does not limit the computer device to which the solution of this application is applied. Specifically, the computer device may include more or fewer components than those in the drawings, or some components are combined, or a different component deployment is used.

In all embodiments, a computer device is provided, including a memory and a processor, the memory storing computer-readable instructions, the processor, when executing the computer-readable instructions, implementing the steps in the foregoing method embodiments.

In all embodiments, a computer-readable storage medium is provided, storing computer-readable instructions, the computer-readable instructions, when executed by a processor, implementing the steps in the foregoing method embodiments.

In all embodiments, a computer program product or a computer-readable instruction is provided, the computer program product or the computer-readable instruction includes computer instructions, and the computer instructions are stored in the computer-readable storage medium. The processor of the computer device reads the computer instructions from the computer-readable storage medium, and the processor executes the computer instructions, to cause the computer device to perform the steps in the foregoing method embodiments.

The user information (including, but not limited to, user equipment information, user personal information, and the like), data (including, but not limited to, data for analysis, stored data, displayed data, and the like), involved in this application all are information and data that are authorized by the user or fully authorized by each party, and the collection, use, and processing of relevant data need to comply with relevant laws and regulations of relevant countries and regions.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. For the purpose of description instead of limitation, the RAM is available in a plurality of forms, such as a static random access memory (SRAM) or a dynamic random access memory (DRAM). The database involved in the embodiments provided in this application may include at least one of a relational database and a non-relational database. The non-relational database may include a blockchain-based distributed database, but is not limited thereto. The processor involved in the embodiments provided in this application may be a general-purpose processor, a central processing unit, a graphics processing unit, a digital signal processor, a programmable logic device, a quantum computing-based data processing logic device, and are not limited thereto.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments only describe several implementations of the present disclosure, which are described specifically and in detail, but cannot be construed as a limitation to the patent scope of the present disclosure. A person of ordinary skill in the art may make various changes and improvements without departing from the ideas of this application, which shall all fall within the protection scope of this application. Therefore, the protection scope of this application is subject to the protection scope of the appended claims.

**Claims**

1.  A vehicle positioning method, executable by a computer device, the method comprising:

    obtaining odometer data of a vehicle during driving;
    predicting, based on the odometer data and a first working state of a filter at a first moment, a second working state of the filter at a second moment, the second moment being later than the first moment;
    predicting location information of the vehicle at the second moment based on the second working state of the filter;
    selecting a target road section that matches the location information from candidate road sections in an electronic map, and determining matching point information corresponding to the location information in the target road section; and
    correcting the location information based on the matching point information, to obtain positioning information of the vehicle at the second moment.

2.  The method according to claim 1, wherein before the obtaining odometer data of a vehicle during driving, the method further comprises:

    obtaining historical odometer data and navigation positioning data of the vehicle during driving;
    initializing the filter based on the historical odometer data and the navigation positioning data;
    selecting a target location from the navigation positioning data as a starting positioning point during the initialization; and
    determining an initial working state of the filter based on course information and location information of the starting positioning point.

3.  The method according to claim 1 or 2, wherein the odometer data comprises odometer data at different moments; and the predicting, based on the odometer data and a first working state of a filter at a first moment, a second working state of the filter at a second moment comprises:

    determining an odometer increment based on the odometer data at different moments; and
    predicting the second working state of the filter at the second moment based on the odometer increment and the first working state of the filter at the first moment.

4.  The method according to claim 3, wherein the predicting the second working state of the filter at the second moment based on the odometer increment and the first working state of the filter at the first moment comprises:

    performing coordinate transformation on the odometer increment based on a coordinate transformation relationship, to obtain the odometer increment in a target coordinate system, the coordinate transformation relationship being a transformation relationship between an odometer coordinate system and the target coordinate system; and
    predicting the second working state of the filter at the second moment based on the odometer increment in the target coordinate system and the first working state of the filter at the first moment.

5.  The method according to any one of claims 1 to 4, wherein the selecting a target road section that matches the location information from candidate road sections in an electronic map, and determining matching point information corresponding to the location information in the target road section comprises:

    selecting, in a case that the electronic map is a first precision map, a target road section that matches the location information from candidate road sections of the first precision map;
    determining projection point information of the location information in the target road section; and
    using the projection point information as the matching point information corresponding to the location information.

6.  The method according to claim 5, wherein the first precision map comprises a self-maintained state, and the method further comprises:

    using the location information as observation information; and
    correcting the self-maintained state based on the observation information, to obtain the corrected self-maintained state.

7. The method according to any one of claims 1 to 6, wherein the selecting a target road section that matches the location information from candidate road sections in an electronic map, and determining matching point information corresponding to the location information in the target road section comprises:

obtaining visual information carrying lane information in a case that the electronic map is a second precision map;
fusing the visual information and the location information to obtain fused location information;
selecting a target lane that matches the fused location information from candidate lanes of the second precision map; and
determining matching point information corresponding to the fused location information in the target lane.

8. The method according to claim 7, wherein after the determining matching point information corresponding to the fused location information in the target lane, the method further comprises:

performing, in a case that it is determined that a credibility of the matching point information is greater than a credibility threshold, a step of correcting the fused location information based on the matching point information;
determining a first distance value between the vehicle and a first lane line, and determining a second distance value between the vehicle and a second lane line in a case that it is determined that the credibility of the matching point information is less than or equal to the credibility threshold;
determining target observation information based on the first distance value, the second distance value, and a lane width in a case that the first distance value and the second distance value satisfy a credible distance condition, the lane width being a distance between the first lane line and the second lane line; and
correcting the fused location information based on the target observation information to obtain the positioning information of the vehicle at the second moment.

9. The method according to any one of claims 1 to 8, wherein the selecting a target road section that matches the location information from candidate road sections in an electronic map, and determining matching point information corresponding to the location information in the target road section comprises:

selecting, in a case that the electronic map is a second precision map, a target lane that matches the location information from candidate lanes of a second precision map; and
determining matching point information corresponding to the location information in the target lane.

10. The method according to any one of claims 1 to 9, wherein the correcting the location information based on the matching point information, to obtain positioning information of the vehicle at the second moment comprises:

determining an observation matrix and observation noise;
determining a correction error of the filter based on the matching point information, a prediction covariance matrix of the filter at the first moment, the observation matrix, and the observation noise;
correcting the second working state based on the correction error, to obtain a corrected second working state; and
determining the positioning information of the vehicle at the second moment based on the corrected second working state.

11. The method according to claim 10, wherein the method further comprises:

obtaining an initial covariance matrix and an initial state transition matrix; and
determining the prediction covariance matrix of the filter at the first moment based on the initial covariance matrix, the initial state transition matrix, a linear quantity of the odometer, and measurement noise of the odometer.

12. The method according to claim 11, wherein the correcting the second working state based on the correction error, to obtain a corrected second working state comprises:

performing, in a case that a transverse distance between the matching point information and the location information is less than or equal to a preset threshold, longitudinal correction on the second working state based on the correction error, to obtain the corrected second working state; and
performing, in a case that the transverse distance between the matching point information and the location information is greater than the preset threshold, longitudinal correction and transverse correction respectively on the second working state based on the correction error, to obtain the corrected second working state.

**13.** A vehicle positioning apparatus, comprising:

an obtaining module, configured to obtain odometer data of a vehicle during driving;

a prediction module, configured to predict, and a first working state of a filter at a first moment, a second working state of the filter at a second moment based on the odometer data; and predict location information of the vehicle at the second moment based on the second working state;

a determining module, configured to select a target road section that matches the location information from candidate road sections in an electronic map, and determine matching point information corresponding to the location information in the target road section; and

a correction module, configured to correct the location information based on the matching point information, to obtain positioning information of the vehicle at the second moment.

**14.** A computer device, comprising a memory and one or more processors, the memory having computer-readable instructions stored therein, and the one or more processors, when executing the computer-readable instructions, implementing the steps of the method according to any one of claims 1 to 12.

**15.** One or more computer storage media having computer-readable instructions stored therein, the computer-readable instructions, when executable by one or more processors, implementing the steps of the method according to any one of claims 1 to 12.

**16.** A computer program product, comprising computer-readable instructions, the computer-readable instructions, when executable by one or more processors, implementing the steps of the method according to any one of claims 1 to 12.

104

Server

Data storage
system

...

Network

102

Terminal

For example

FIG. 1

202

Obtain odometer data of a vehicle during driving

204

Predict, based on the odometer data and a first working state of a filter at a first moment, a second working state of the filter at a second moment

206

Predict location information of the vehicle at the second moment based on the second working state of the filter

208

Select a target road section that matches the location information from candidate road sections in an electronic map, and determine matching point information corresponding to the location information in the target road section

210

Correct the location information based on the matching point information, to obtain positioning information of the vehicle at the second moment

FIG. 2

- ● State positioning point
- ○ GNSS positioning point
- → Positioning course

L1

G1

d

P

G2

D

Lane 1

L2

FIG. 3

402

Perform, in a case that a transverse distance between the matching point information and the location information is less than or equal to a preset threshold, longitudinal correction on the second working state based on the correction error, to obtain the corrected second working state

404

Perform, in a case that the transverse distance between the matching point information and the location information is greater than the preset threshold, longitudinal correction and transverse correction respectively on the second working state based on the correction error, to obtain the corrected second working state

## FIG. 4

XXXXXXX1.8.2
XXXXXX1.4 XXXXX
XXX0.000000
XXXX_____00
XXXX:5358.386002

Lane 2

Lane 1

## FIG. 5

| Data acquisition module | → | Kalman filter | → |

| SD map matching module | | Initialization |

## FIG. 6

FIG. 7

FIG. 8

(a)

(b)

FIG. 9

FIG. 10

Memory

Operating system

Computer-readable
instructions

Non-volatile storage medium

Processor

Internal memory

System bus

Input/Output interface

Input apparatus

Communication
interface

Display unit

Computer device

FIG. 11

### INTERNATIONAL SEARCH REPORT

| International application No. |
| --- |
| **PCT/CN2023/100444** |

**A. CLASSIFICATION OF SUBJECT MATTER**

G01C21/30(2006.01)i

According to International Patent Classification (IPC) or to both national classification and IPC

**B. FIELDS SEARCHED**

Minimum documentation searched (classification system followed by classification symbols)

IPC：G01C21/-

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN: 变换, 车道, 车道宽度, 车道线, 初始, 道路, 地图, 第二, 递推, 定位, 惯导, 惯性, 惯组, 贺进, 后一, 精度, 经度, 经纬, 距离, 卡尔曼, 可信度, 里程, 路段, 匹配, 融合, 摄像, 视觉, 腾讯, 投影, 图像, 推测, 推算, 位置, 位姿, 卫星, 下一, 相机, 校正, 校准, 修正, 预测, 置信度, 转换, 状态, 姿态, 坐标, EKF, GNSS, GPS, IMU, INS, kalman, road, SINS, UKF, match+, locat+, odometer?, speedometer?, map?, inertia?, milemeter?, position+, predict+, reckon+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115326084 A (TENCENT TECHNOLOGY (SHENZHEN) CO., LTD.) 11 November 2022 (2022-11-11)<br>claims 1-15, and description, paragraphs 0001-0227 | 1-16 |
| Y | CN 110986930 A (BEIJING SANKUAI ONLINE TECHNOLOGY CO., LTD.) 10 April 2020 (2020-04-10)<br>description, paragraphs 00039-0150 | 1-16 |
| Y | CN 102682590 A (AUTONAVI SOFTWARE CO., LTD.) 19 September 2012 (2012-09-19)<br>description, paragraphs 0026-0033 | 1-16 |
| Y | CN 111596329 A (CHINA FAW CO., LTD.) 28 August 2020 (2020-08-28)<br>description, paragraphs 0041-0058 | 2 |
| A | CN 110865405 A (ZHEJIANG SENSETIME TECHNOLOGY DEVELOPMENT CO., LTD.) 06 March 2020 (2020-03-06)<br>entire document | 1-16 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 September 2023** | **20 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/100444**

**C. DOCUMENTS CONSIDERED TO BE RELEVANT**

| Category* | Citation of document, with indication, where appropriate, of the relevant passages | Relevant to claim No. |
|---|---|---|
| A | CN 108827292 A (SICHUAN UNIVERSITY) 16 November 2018 (2018-11-16) entire document | 1-16 |
| A | CN 109581449 A (ANHUI JIANGHUAI AUTOMOBILE GROUP CORP., LTD.) 05 April 2019 (2019-04-05) entire document | 1-16 |
| A | CN 113551680 A (SAIC GENERAL MOTORS CO., LTD. et al.) 26 October 2021 (2021-10-26) entire document | 1-16 |
| A | KR 20190109645 A (HYUNDAI MOBIS CO., LTD.) 26 September 2019 (2019-09-26) entire document | 1-16 |

Form PCT/ISA/210 (second sheet) (July 2022)

<div align="center">

**INTERNATIONAL SEARCH REPORT**
**Information on patent family members**

</div>

International application No.

**PCT/CN2023/100444**

| Patent document cited in search report | | | Publication date (day/month/year) | Patent family member(s) | | | Publication date (day/month/year) |
|---|---|---|---|---|---|---|---|
| CN | 115326084 | A | 11 November 2022 | HK | 40075665 | A0 | 27 January 2023 |
| CN | 110986930 | A | 10 April 2020 | CN | 110986930 | B | 15 July 2022 |
| CN | 102682590 | A | 19 September 2012 | CN | 102682590 | B | 30 April 2014 |
| CN | 111596329 | A | 28 August 2020 | | None | | |
| CN | 110865405 | A | 06 March 2020 | | None | | |
| CN | 108827292 | A | 16 November 2018 | | None | | |
| CN | 109581449 | A | 05 April 2019 | CN | 109581449 | B | 14 September 2021 |
| CN | 113551680 | A | 26 October 2021 | | None | | |
| KR | 20190109645 | A | 26 September 2019 | KR | 102565482 | B1 | 11 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022109291632